(19)

Europäisches Patentamt
European Patent Office
Office européen des brevets

(11) **EP 1 873 226 A2**

(12) **EUROPEAN PATENT APPLICATION**

(43) Date of publication:
**02.01.2008 Bulletin 2008/01**

(51) Int Cl.:
***C09K 11/77*** *(2006.01)*

(21) Application number: **07012486.2**

(22) Date of filing: **26.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **27.06.2006 JP 2006176732**

(71) Applicant: **Fujifilm Corporation**
**Minato-ku**
**Tokyo (JP)**

(72) Inventor: **Ikada, Tomotake**
**c/oFujifilm Corporation**
**Ashigarakami-gun,**
**Kanagawa-ken (JP)**

(74) Representative: **Klunker . Schmitt-Nilson . Hirsch**
**Winzererstrasse 106**
**80797 München (DE)**

(54) **Garnet-type compound, and method of manufacturing the same**

(57) A garnet-type compound is represented by general formula $A_3B_2C_3O_{12}$ wherein A, B, C respectively represent one or more elements forming an A site, one or more elements forming a B site and one or more elements forming a C site, and O represents an oxygen atom. The following formulae (1) and (2) are satisfied.

$$0.50 \leq rB/rA \leq 0.86 \quad \cdots \quad (1)$$

$$11.70 \leq a \leq 13.02 \quad \cdots \quad (2)$$

wherein rA represents an average ionic radius of one or more elements which forms the A site, rB represents an average ionic radius of one or more elements which forms the B site, and a represents a lattice constant.

EP 1 873 226 A2

**Description**

BACKGROUND OF THE INVENTION

Field of the Invention

This invention relates to a garnet-type compound and a method of manufacturing the same; a composition including the garnet-type compound, a molded body such as a light emitting body or a magnetic body, and various systems using the molded body.

Description of the Related Art

There has been used a garnet-type compound represented by general formula $A_3B_2C_3O_{12}$ (wherein A, B, C respectively represent an A site element, a B site element and a C site element, and O represents an oxygen atom) as material for a light emitting compound used in a phosphor or a solid laser medium, a magnetic compound used in an optical isolator or an optical circulator, and for a substrate for forming a film. It is necessary to design a suitable composition according to the application in the garnet-type compound and various compositions of the garnet-type compounds have been reported.

As light emitting compound, there have been known those where a mother compound of the garnet-type compound is doped with a light emitting center ion such as a rare earth ion, Ti ion, or a Cr ion.

In such a light emitting compound, it is necessary to suitably design the composition from the viewpoint of the light emitting characteristics since the light emitting characteristics change if one of the light emitting center ion to be doped or the composition of the mother compound is changed.

For example, since a lattice defect can cause a loss of activity of excited photons, there is a fear that the lattice defect can adversely affect the light emitting characteristics such as intensity of fluorescence. When the loss of activity of excited photons is a large factor of reducing the efficiency, the light emitting efficiency can be improved by adjusting the mother compound to reduce the lattice defect.

Further, a shallow level, where the excited photons are once trapped, is sometimes introduced for the purpose of elongating the apparent service life of the fluorescence. For example, a shallow level, where the excited photons are once trapped, can be introduced by adjusting the mother compound to intentionally introduce the lattice defect.

As a magnetic compound used in the optical isolator or the optical circulator, there have been known garnet-type compounds such as YIG ($Y_3Fe_5O_{12}$). In such an application, a compound which is large in the coefficient of Faraday rotation and is small in the absorption loss in the transmitting wavelength region is preferable. For example, there is known that, in the YIG, by substituting a part of Y for Bi, the coefficient of Faraday rotation can be in creased. However, since the amount by which Y can be substituted for Bi is limited, it is conceivable that a novel composition design is necessary to improve the performance.

Also in a substrate used in production of the optical isolator or the optical circulator, there have been employed a garnet-type compound. However, conventionally, the substrate is used only to slightly change the value of the lattice constant and no material design of a substrate exceeding it has been carried out.

Since the garnet-type compound has three sites, i.e., the A site, B site and C site, which the positive ions occupy and a plurality of kinds of ions can exist in each site in a state of solid solution, various garnet-type compounds can be synthesized. However, there exists no material design theory that teaches whichever composition is to be selected to obtain a garnet structure, and it is a present situation that a search is carried out depending on the experience and the sixth sense of the investigator.

Though in a perovskite compound represented by a general formula $ABO_3$, it is possible to expect a region of composition within which the composition takes a perovskite structure by the tolerance factor t represented by the following formula. Specifically, in the range 0.75<t<1.10, the composition takes a perovskite structure, and when t≤0.75, lattice is too deformed and the composition comes to take an ilmenite structure.

Further, it is possible to estimate even the crystalline system on the basis of the tolerance factor t. Specifically, it has been known that when t=0.90 to 1.10, a cubic system is obtained and when t=0.75 to 0.90, an orthorhombic system or a single crystal or a tetragonal system is obtained. Existence of such a theory largely contributes to the material design of perovskite compounds.

$$t=(rA+rO/\surd2(rB+rO)$$

(wherein rA represents an average ionic radius of one or more elements which forms the A site, rB represents an average ionic radius of one or more elements which forms the B site, and rO represents an ionic radius of oxygen ion.)

In the garnet-type compound, as a rule relating the composition and the structure, the following formula for calculating the lattice constant from the average ionic radius of the ions forming each site is only proposed. See, "LANDORT-BORNSTEIN Group III 12a (Garnets and Perovskites), (1.1.3 :Lattice parameters of garnets) ", pp. 22-23, Springer-Verlag Berlinh, Heiderberg, New York, 1978. In many garnet-type compounds, that the lattice constant changes according the following formula have been measured when the average ionic radius of each site is changed and the reasonability of the following formula has proved.

$$a = b1 + b2 \times rA + b3 \times rB + b4 \times rC + b5 \times rA \times rB + b6 \times rA \times rC$$

(wherein a represents a lattice constant, rA represents an average ionic radius of one or more elements which forms the A site, rB represents an average ionic radius of one or more elements which forms the B site, and rC represents an average ionic radius of one or more elements which forms the C site.

b1 to b6 are constants and b1=7.02954, b2=3. 31277, b3=2.49398, b4=3.34124, b5=-0.87758 and b6=-1.38777.)

Since the lattice constant can be estimated on the basis of the rule described above, the rule is useful to, for instance, slightly adjust the lattice constant for lattice alignment in the material design of a substrate. However, different from the tolerance factor t for the Perovskite compound, what composition of garnet-type compound can be actually obtained cannot be determined on the basis of the rule. Further, it is difficult to estimate the influence on the crystal structure of a fine region when an ion is substituted for an element of a different ionic radius.

SUMMARY OF THE INVENTION

In view of the foregoing observations and description, the primary object of the present invention is to provide a novel theory of material design on which the region of composition where the compound can take a garnet structure can be estimated.

Another object of the present invention is to provide garnet-type compound designed on the basis of the material design theory described above and to provide a method of manufacturing the garnet-type compound designed on the basis of the material design theory described above.

In accordance with the present invention, there is provided with a method of manufacturing a garnet-type compound represented by general formula $A_3B_2C_3O_{12}$ (wherein A, B, C respectively represent one or more elements forming an A site, one or more elements forming a B site and one or more elements forming a C sites, and O represents an oxygen atom) wherein the improvement comprises in that

composition is determined according to desired characteristics on the basis of a composition region, where a garnet structure can be taken, led from an average ionic radius and a lattice constant of one or more elements forming each site under the conditions satisfying the following formulae (1) and (2).

$$0.50 \leq rB/rA \leq 0.86 \quad \cdots \quad (1)$$

$$11.70 \leq a \leq 13.02 \quad \cdots \quad (2)$$

(wherein rA represents an average ionic radius of one or more elements which forms the A site, rB represents an average ionic radius of one or more elements which forms the B site, and a represents a lattice constant.)

In accordance with the present invention, there is further provided with a garnet-type compound represented by general formula $A_3B_2C_3O_{12}$ (wherein A, B, C respectively represent one or more elements forming an A site, one or more elements forming a B site and one or more elements forming a C sites, and O represents an oxygen atom) wherein the improvement comprises in that

the following formulae (1) and (2) are satisfied.

$$0.50 \leq rB/rA \leq 0.86 \quad \cdots \quad (1)$$

$$11.70 \leq a \leq 13.02 \quad \cdots \quad (2)$$

(wherein rA represents an average ionic radius of one or more elements which forms the A site, rB represents an average ionic radius of one or more elements which forms the B site, and a represents a lattice constant.)

In this specification, the "ionic radius" means a so-called Shannon ionic radius. See "Revised Effective Ionic Radii and Systematic Studies of Interatomic Distances in Halides and Chalcogenides", R.D. Shannon, Acta Crystallogr A32, pp. 751-767, 1976. The "average ionic radius" is a value which is represented by $\Sigma C_i R_i$ when the mole fraction of the ion in the lattice site is assumed to be C and the ionic radius is assumed to be R.

The mole fraction C of the ion in the lattice site can be determined by ICP light emission analysis by X-ray powder diffraction (XRD) or single crystal X-ray diffraction. When a single phase sintered body is obtained by firing mixtures of raw material powders, the mole fraction C of the ion in the lattice site can be determined even by mixing ratio of the raw material powders after the crystalline structure is identified.

The lattice constant a can be obtained by the result of XRD measurement. That is, the peak value of diffraction at a high angle e.g., $2\theta=100$ to $150°$ or so) is obtained by a tangential method and the lattice constant a can be obtained by the use of a Nelson-Riley function. The lattice constant a can be obtained also from the following formula for calculating the lattice constant a from the ionic radius of the ion forming each site (the formula disclosed in "LANDORT-BORNSTEIN Group III 12a (Garnets and Perovskites), (1.1.3:Lattice parameters of garnets) ", pp. 22-23, Springer-Verlag Berlinh, Heiderberg, New York, 1978).

$$a=b1+b2\times rA+b3\times rB+b4\times rC+b5\times rA\times rB+b6\times rA\times rC$$

(wherein a represents a lattice constant, rA represents an average ionic radius of one or more elements which forms the A site, rB represents an average ionic radius of one or more elements which forms the B site, and rC represents an average ionic radius of one or more elements which forms the C site.

b1 to b6 are constants and b1=7.02954, b2=3.31277, b3=2.49398, b4=3.34124, b5=-0.87758 and b6=-1.38777.)

The garnet-type compound of the present invention may be either of a single crystal structure or of a polycrystalline structure and may include an unavoidable impurity.

The present invention provides a novel theory of material design on the basis of which a composition region where it can be expected that the compound can take a garnet structure can be estimated. In accordance with the present invention, that the compound can take a garnet structure can be estimated from balance between an ionic radius and a lattice constant of each site.

This invention is extremely high in its technical value since it makes feasible the material design which conventionally has been done depending on the experience and the sixth sense of the investigator.

BRIEF DESCRIPTION OF THE DRAWINGS

Figure 1 is a view showing a structure of a light emitting system in accordance with an embodiment of the present invention,
Figure 2A is a view showing a structure of a solid laser in accordance with an embodiment of the present invention,
Figure 2B is a view showing a design change of the same,
Figure 3 is a view showing a positron emission tomography system (PET) provided with an ionizing radiation detecting system of the present invention,
Figures 4A and 4B are views showing use of a positron emission tomography system (PET) provided with an ionizing radiation detecting system of the present invention,
Figure 5A is a view showing an X-ray tomography system provided with an ionizing radiation detecting system of the present invention,
Figure 5B is a view showing use of the X-ray tomography system,
Figure 6 is a view plotting (rA, rB) of the compounds 1 to 126,
Figure 7 is a view plotting the same of only those of the compounds (rA, rB) of which are plotted in Figure 6 where the C site comprises Ga (represented by a general formula $A_3B_2Ga_3O_{12}$),
Figure 8 is a view plotting the same of only those of the compounds (rA, rB) of which are plotted in Figure 6 where the C site comprises Al (represented by a general formula $A_3B_2Al_3O_{12}$),
Figure 9 is a view plotting the (rA, rB) of the compounds 1 to 6 where the C site comprises Ga (represented by a general formula $A_3B_2Ga_3O_{12}$) in the same manner as in Figure 6, and at the same time, showing the intensity of fluorescence of each compound,

Figure 10 is a view plotting the (rA, rB) of the compounds 77 to 79 where the C site comprises Al in the same manner as in Figure 6, and at the same time, showing the intensity of fluorescence of each compound,

Figure 11 is a view plotting the (rA, rB) of the compounds 109 to 111 and 126 in the same manner as in Figure 6,

Figure 12 is a view plotting the (rA, rB) of the compounds 109 to 111 and 126 in the same manner as in Figure 6,

Figure 13 is a view for illustrating an example of material design based on the theory of material design in accordance with the present invention,

Figure 14 shows an XRD pattern of compound 1,

Figure 15 shows an XRD pattern of compound 7,

Figure 16 shows an XRD pattern of compound 77,

Figure 17 shows an XRD pattern of compound 114,

Figure 18 shows a fluorescence spectrum of compound 1,

Figure 19 shows a fluorescence spectrum of compound 2,

Figure 20 shows a fluorescence spectrum of compound 3,

Figure 21 shows a fluorescence spectrum of compound 4,

Figure 22 shows a fluorescence spectrum of compound 5,

Figure 23 shows a fluorescence spectrum of compound 6,

Figure 24 shows a fluorescence spectrum of compound 77,

Figure 25 shows a fluorescence spectrum of compound 78, and

Figure 26 shows a fluorescence spectrum of compound 79.

DESCRIPTION OF THE PREFERRED EMBODIMENT

The present invention will be described in detail, hereinbelow.

(garnet-type compound and a method of manufacturing the same)

This inventor has found that the composition region where the compound can take a garnet structure can be estimated from the balance between an ionic radius and a lattice constant of each site and has completed this invention.

In accordance with the present invention, there is provided with a garnet-type compound represented by general formula $A_3B_2C_3O_{12}$ (wherein A, B, C respectively represent one or more elements forming an A site, one or more elements forming a B site and one or more elements forming a C sites, and O represents an oxygen atom) wherein the improvement comprises in that

the following formulae (1) and (2) are satisfied.

A method of manufacturing a garnet-type compound of the present invention is characterized in that the composition is determined according to desired characteristics on the basis of composition region led from the average ionic radius of one or more elements and a lattice constant of each lattice site under the conditions satisfying the following formulae (1) and (2).

$$0.50 \leq rB/rA \leq 0.86 \cdots (1)$$

$$11.70 \leq a \leq 13.02 \cdots (2)$$

(wherein rA represents an average ionic radius of one or more elements which forms the A site, rB represents an average ionic radius of one or more elements which forms the B site, and a represents a lattice constant.)

In the present invention, three of rA, rB and a lattice constant are used as parameters. The lattice constant can be calculated on the basis of the formula disclosed in "LANDORT-BORNSTEIN Group III 12a (Garnets and Perovskites), (1.1.3:Lattice parameters of garnets) ", pp. 22-23, Springer-Verlag Berlinh, Heiderberg, New York, 1978 where lattice constant a is calculated from rA, rB and rC representing an ionic radius of ions forming each site. That is, in the present invention, the composition is determined from rA, rB and rC.

In the garnet-type compound of the present invention, the element forming each site is not limited. As the garnet-type compound of the present invention, a garnet-type compound, where the A site includes an at least one element selected from the group consisting of La, Gd, Y and Lu, the B site includes an at least one element selected from the group consisting of Sc, Ga and Al and the C site includes Ga and/or Al, can be shown.

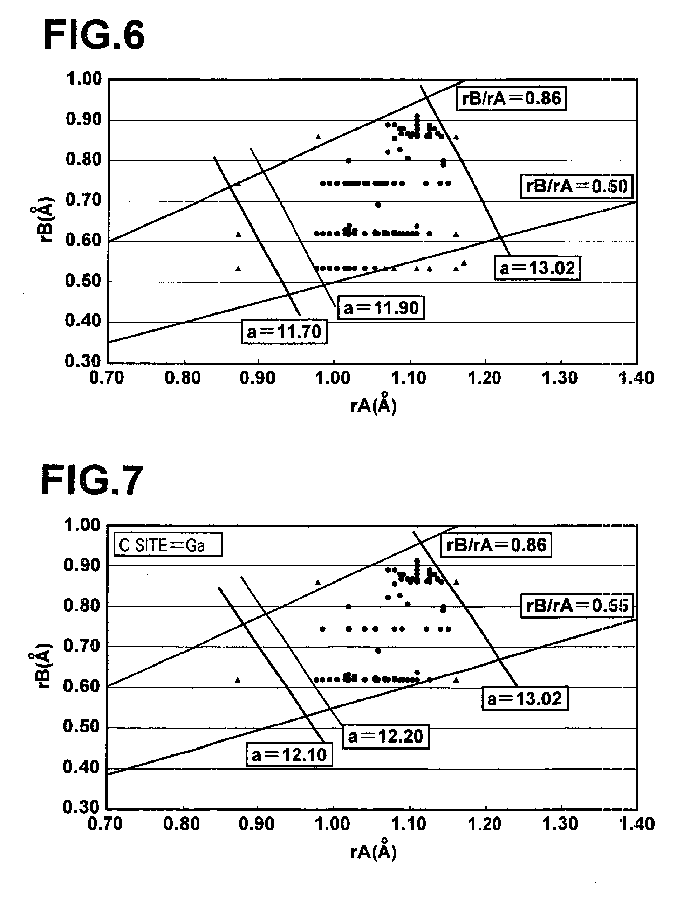

Figure 6 is a view plotting (rA, rB) the numbers of compounds 1 to 126 which are represented by general

formula $A_3B_2C_3O_{12}$ and include garnet-type compounds prepared by the inventor of the present invention with the value of rA taken as the x coordinate and the value of rB taken as the y coordinate (the plotted compounds are shown in the following tables 1 to 3).

The garnet-type compounds prepared by the inventor of the present invention includes a garnet-type compound of a novel composition. In Figure 6, sign • represents those where the single-phase structure was obtained, and sign ▲ represents those where a different phase was viewed.

In Figure 6, straight lines whose rB/rA=0.50 (the lower limit in the formula (1)), rB/rA=0.86 (the upper limit in the formula (1)), a=11.70 (the lower limit in the formula (2)) and a=13.02 (the upper limit in the formula (2)), respectively are depicted.

Figure 6 shows that the single-phase structure was obtained substantially in the range where the above formulae (1) and (2) are satisfied. That is, when composition is determined to be substantially in the range where the above formulae (1) and (2) are satisfied, a garnet-type compound can be stably obtained.

As can be seen from Figure 6, it is preferred that composition is determined to be substantially in the range where the following formulae (1) and (2A) are satisfied.

$$0.50 \leq rB/rA \leq 0.86 \quad \cdots \quad (1)$$

$$11.90 \leq a \leq 13.02 \quad \cdots \quad (2A)$$

In order for a compound to take a garnet structure, it is important that the ionic-radii of the A to C sites are well balanced.

It is conceivable that in the range of rB/rA<0.50, it is difficult for the compound to take a garnet structure because rB is too small to rA and rC or rA is too large to rB and rC.

It is conceivable that in the range of rB/rA.>0.86, it is difficult for the compound to take a garnet structure because rB is too large to rA and rC or rA is too small to rB and rC.

It is conceivable that in the range of a<11.70, it is difficult for the compound to take a garnet structure because rA and rB are too small to rC.

It is conceivable that in the range of a>13.02, it is difficult for the compound to take a garnet structure because rA and rB are too large to rC.

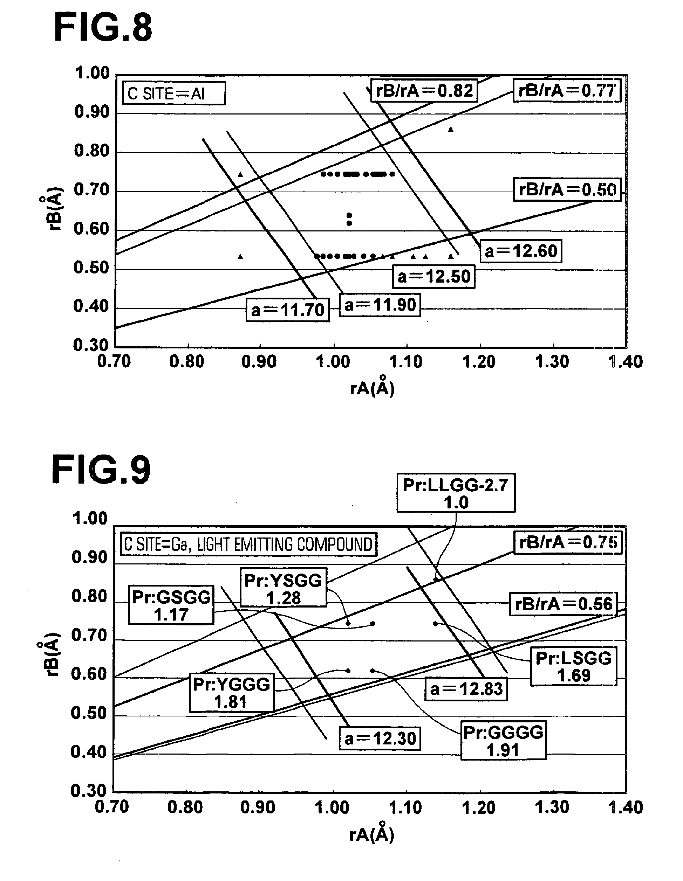

As can be seen from Figure 6, there are somewhat compositions where a different phase was viewed even in the range where the above formulae (1) and (2) are satisfied near the border between the range where the above formulae (1) and (2) are satisfied and the range where the above formulae (1) and (2) are not satisfied. This inventor has found that the suitable range can be defined by dividing the C site elements according to the kind thereof. This is shown in Figures 7 and 8. Figure 7 is a view plotting the same of only those of the compounds (rA, rB) of which are plotted in Figure 6 where the C site comprises Ga (represented by a general formula $A_3B_2Ga_3O_{12}$), and Figure 8 is a view plotting the same of only those of the compounds (rA, rB) of which are plotted in Figure 6 where the C site comprises Al.

As can be seen from Figure 7, in the compounds where the C site comprises Ga (represented by a general formula $A_3B_2Ga_3O_{12}$), a single crystal structure is obtained in the range where the following formulae (1A) and (2B) are satisfied. That is, in the compounds where the C site comprises Ga (represented by a general formula $A_3B_2Ga_3O_{12}$), it is preferred that the composition be determined to satisfy the following formulae (1A) and (2B).

$$0.55 \leq rB/rA \leq 0.86 \quad \cdots \quad (1A)$$

$$12.10 \leq a \leq 13.02 \quad \cdots \quad (2B)$$

In the compounds where the C site comprises Ga (represented by a general formula $A_3B_2Ga_3O_{12}$), it is more preferred that the composition be determined to satisfy the following formulae (1A) and (2C).

$$0.55 \leq rB/rA \leq 0.86 \quad \cdots \quad (1A)$$

$$12.20 \leq a \leq 13.02 \quad \cdots \quad (2C)$$

As can be seen from Figure 8, in the compounds where the C site comprises Al (represented by a general formula $A_3B_2Al_3O_{12}$), a single crystal structure is obtained in the range where the following formulae (1B) and (2D) are satisfied. That is, in the compounds where the C site comprises Al (represented by a general formula $A_3B_2Al_3O_{12}$), it is preferred that the composition be determined to satisfy the following formulae (1B) and (2D).

$$0.50 \leq rB/rA \leq 0.82 \quad \cdots \quad (1B)$$

$$11.70 \leq a \leq 12.60 \quad \cdots \quad (2D)$$

In the compounds where the C site comprises Al (represented by a general formula $A_3B_2Al_3O_{12}$), it is more preferred that the composition be determined to satisfy the following formulae (1C) and (2E).

$$0.50 \leq rB/rA \leq 0.77 \quad \cdots \quad (1C)$$

$$11.90 \leq a \leq 12.50 \quad \cdots \quad (2E)$$

<light emitting compound>

As the garnet-type compounds of the present invention, a garnet-type compound which is represented by the above general formula $A_3B_2C_3O_{12}$ and includes at least one kind of element selected from the group consisting of lanthanide elements (Ce, Pr, Nd, Pm, Sm, Eu, Gd, Tb, Dy, Ho, Er, Tm, Yb), Ti and Cr may be shown.

In the above compounds, a light emitting compound including Pr is conceivable to be useful as light emitting material since it has a plurality of fluorescent peaks over a wide range from an ultraviolet region to an infrared region. In "examples" to be described later, this inventor has synthesize Pr-containing garnet-type compounds such as Pr:LLGG (compound 1), Pr:YSGG (compound 2), Pr:GGGG (compound 3), Pr:LSGG (compound 4), Pr:GSGG (compound 5), Pr:YGGG (compound 6) and Pr:(LY)SGG (compound 7) (specific compositions are disclosed in the following table 1). Such Pr-containing garnet-type compounds emit fluorescent light in a visible region (400 to 700nm) excited by light of 300 to 500nm and emit fluorescent light in an ultraviolet to visible region (250 to 700nm) excited by ultraviolet rays or radiations.

This inventor has measured the intensity of fluorescent light emitted from some light emitting compounds of the garnet-type compounds shown in Figure 7, where the C site comprises Ga. Figure 9 is a view plotting the compounds 1 to 6, where the intensity of fluorescent light have been measured, in the same manner as in Figure 6. At the same time, in Figure 9, call of the compounds and the intensity of fluorescence of each compounds (a figure written under the call of the compound) are shown. The intensity of fluorescence is written in the relative value with the intensity of Pr: LLGG-2.7 (compound 1) taken as 1.

As shown in Figure 9, in compounds, where the C site comprises Ga (represented by a general formula $A_3B_2Ga_3O_{12}$), the intensity of fluorescence is higher than Pr:LLGG-2.7 in the range satisfying the following formulae (1D) and (2F). That is, in compounds, where the C site comprises Ga (represented by a general formula $A_3B_2Ga_3O_{12}$), it is preferred that the composition be determined to satisfy the following formulae (1D) and (2F).

$$0.56 \leq rB/rA \leq 0.75 \quad \cdots \quad (1D)$$

$$12.30 \leq a \leq 12.83 \quad \cdots \quad (2F)$$

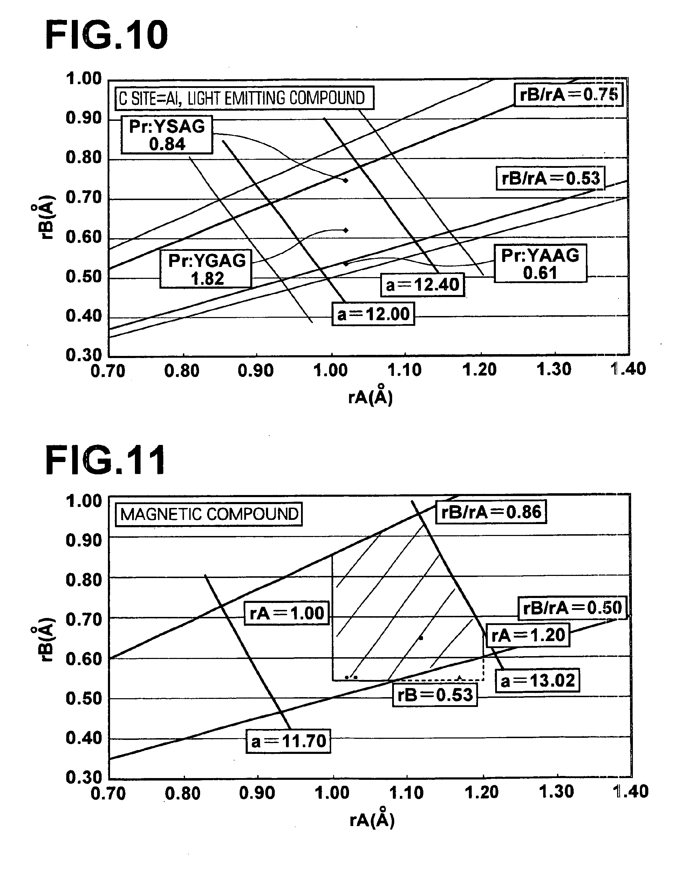

This inventor has measured the intensity of fluorescent light emitted from some light emitting compounds of the garnet-type compounds shown in Figure 8, where the C site comprises Al. Figure 10 is a view plotting the compounds 77 to 79, where the intensity of fluorescent light have been measured, in the same manner as in Figure 9. The intensity of fluorescence is in the relative value with the intensity of Pr:LLGG-2.7 (compound 1) taken as 1.

As shown in Figure 10, in compounds, where the C site comprises Al (represented by a general formula $A_3B_2Al_3O_{12}$), the intensity of fluorescence is high in the range satisfying the following formulae (1D) and (2F). That is, in compounds, where the C site comprises Al (represented by a general formula $A_3B_2Al_3O_{12}$), it is preferred that the composition be determined to satisfy the following formulae (1E) and (2G).

$$0.53 \leq rB/rA \leq 0.75 \cdots (1E)$$

$$12.00 \leq a \leq 12.40 \cdots (2G)$$

<magnetic compound>

A magnetic compound is included in the garnet-type compounds of the present invention.

As a garnet-type magnetic compound, Fe-containing magnetic compound (M), where Fe is contained in the B site and/or C site, may be shown.

For an application of an optical isolator, an optical circulator or the like, Fe-containing magnetic compound (M-1), where Y and/or Bi is contained in the A site is preferred.

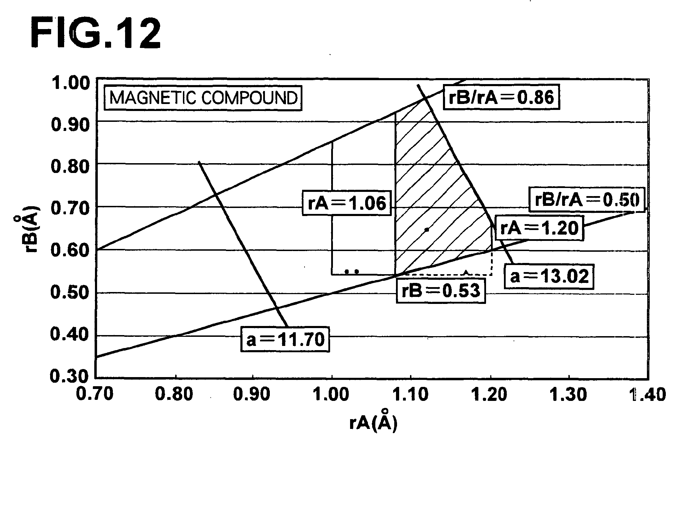

Figure 11 and 12 are views plotting in the same manner as in Figure 6 the Fe-containing magnetic compounds (M-1) 109 to 111 and 126, where Y and/or Bi is contained in the A site and Fe is contained in the B site and/or C site, in compounds plotted in Figure 6. The sign • denotes those where the single-phase structure was obtained, and the sign ▲ denotes those where a different phase was viewed.

As can be seen from Figures 11 and 12, in the Fe-containing magnetic compounds (M-1) where Y and/or Bi is contained in the A site and Fe is contained in the B site and/or C site, a single crystal structure is obtained in the range where the following formulae, (1), (2), (3) and (4) preferably (1), (2), (3A) and (4) are satisfied. That is, in the Fe-containing compounds (M-1), it is preferred that the composition be determined to satisfy the following formulae, (1), (2), (3) and (4) preferably (1), (2), (3A) and (4).

$$0.50 \leq rB/rA \leq 0.86 \cdots (1)$$

$$11.70 \leq a \leq 13.02 \cdots (2)$$

$$1.00 \leq rA \leq 1.20 \cdots (3)$$

$$1.06 \leq rA \leq 1.20 \cdots (3A)$$

$$0.53 \leq rB \cdots (4)$$

As the Fe-containing magnetic compounds (M), for instance, the following magnetic compounds (M-2) to (M-4) can be shown other than the above magnetic compounds (M-1).

Magnetic compound (M-2):Magnetic compounds where at least one element selected from the group consisting of Y, Nd, Sm, Gd, Tb, Ho, and Lu is contained in the A site, and at least one element selected from the group consisting of GA, Al and In is contained in the B site.

Magnetic compound (M-3): Magnetic compounds where at least one element selected from the group consisting of Mg, Ca and Sr is contained in the A site, and Si and/or Ge is contained in the C site. Magnetic compound (M-4): Magnetic compounds where at least one element selected from the group consisting of Mg, Ca and Sr is contained in the A site, and Zr and/or Sn is contained in the B site.

<crystal structure & method of manufacture>

The garnet-type compound of the present invention may be either of a single crystal structure or of a polycrystalline structure and may contain an unavoidable impurity. The shape of the garnet-type compound of the present invention may be a bulk body like a pellet, a disk or a rod or film formed on a substrate, or powders.

As forms of single crystal inorganic compound, there can be shown single crystal bodies such as those grown by a single crystal growth method including a lift-up method (a CZ method), a fusion liquid lift-up method (a LEC method), an EFG method, a bridgman's method, a Verneuil's method, a floating zone method (an FZ method), a hydrothermal synthesis method, a flux method, and a micro lift-down method, single crystal film grown by a gas-phase deposition method such as a vacuum deposition method and a sputtering, and single crystal film obtained by liquid-phase-epitaxial-growing a crystal, e.g., by an LPE method, on a substrate having an equivalent lattice constant.

As forms of polycrystalline inorganic compound, there can be shown particles of the raw material are formed into a predetermined shape and sintered, or ground products thereof,
polycrystalline particle deposition obtained from the raw material solution by a reaction of separation,
polycrystalline bodies obtained by sol/gel method, and
polycrystalline film grown by a gas-phase deposition method such as a vacuum deposition method and a sputtering.

A single crystal body and a polycrystalline body are used after heat treatment and machining such as cutting or grinding is applied, if necessary.

In a polycrystalline body, the degree of freedom in a composition design is higher than a single crystal body, and can be manufactured compound of composition which cannot be realized by a single crystal body. The polycrystalline body is especially preferable in that it can be manufactured at higher density in a larger size at low cost.

When a polycrystalline body of garnet-type is employed in the phosphor for the white light emitting diode, solid laser medium, fiber amplifier, scintillator, or the like, it is necessary for the polycrystalline body to have a light transmissivity. Especially, for the application such as the solid laser medium or the fiber amplifier, it is preferred for the polycrystalline body to be transparent to such an extent that substantially no scattering is observed. Since being of a cubic crystal, the compound having a garnet structure can be light transmitting by adjusting a high density sintered body to, for instance, a stoichiometric density where bores are completely removed. Otherwise, it is preferred that the polycrystalline body be thin to such an extent that no influence is on scattering. When taking into account the light transmissivity, the polycrystalline body is preferably of a single-phase structure.

As described above, the present invention provides a novel theory of material design on which the region of composition where the compound can take a garnet structure can be estimated. In accordance with the present invention, the range where the compound can take a garnet structure can be estimated from balance between an ionic radius and a lattice constant of each site.

This invention is extremely high in its technical value since the material design which conventionally has been done depending on the experience and the sixth sense of the investigator can be done theoretically and efficiently.

This inventor actually has prepared novel garnet-type compounds (compounds 7 and 80) in the range where the compound can take a garnet structure (the range where the above formulae (1) and (2) are satisfied). Thus, since composition may have to be determined in the range where the compound can take a garnet structure (the range where the above formulae (1) and (2) are satisfied), design of novel garnet-type compound can be easily done.

Further in accordance with the material design of the present invention, design of composition of garnet-type compound of desired characteristics can be easily done.

For example, defects of various types are often related to appearing of function of inorganic material. In accordance with the material design of the present invention, the composition regions where defect is relatively apt to be generated and where defect is relatively hard to be generated can be estimated and accordingly, composition can be determined according to a desired amount of defect.

As can be seen from Figures 6 to 12, even in the range where the garnet structure can be taken (the above formulae (1) and (2) can be satisfied), a single layer structure can be especially stably obtained in a range but near the border between the range where the single layer structure can be taken and the range where the single layer structure cannot be taken, and when the compound is light emitting compound, a strong fluorescence intensity can be obtained.

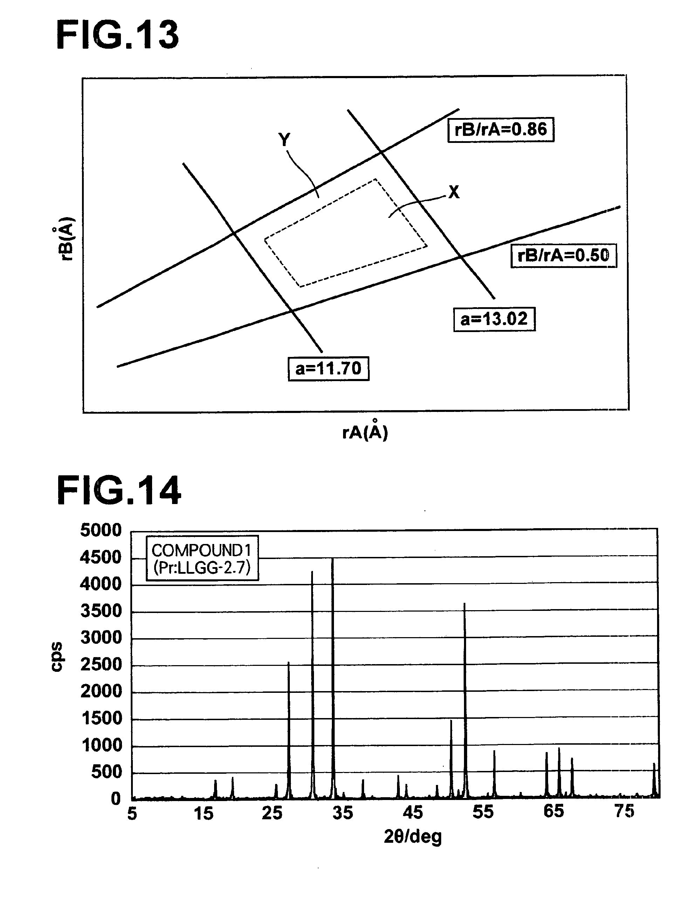

As can be seen from Figure 13, even in the range where the garnet structure can be taken (the above formulae (1) and (2) can be satisfied), defect is relatively apt to be generated in a peripheral region Y (a region near the border between the region where the single layer structure can be taken and the region where the single layer structure cannot be taken) and in a region X inside the region Y a structure which is less in defect and more stable can be obtained. Figure 13 is imaginary, and the border between the peripheral region Y and the region X inside the region Y actually is not in the illustrated position and the border is not clear.

In applications, where it is required that the compound is stable in structure and is less in defect, it is conceivable that garnet-type compound which is less in defect, stable in structure and stably exhibits high function can be obtained by selecting a composition in the region X.

By virtue of the existence of the defect, exhibition of a special function can be sometimes expected. In this case, garnet-type compound having a relatively large amount of defect can be obtained, which leads to creation of garnet-type compound having a special function, by selecting a composition in the peripheral region Y, where defect is relatively apt to be generated, in the range where the garnet structure can be taken (the above formulae (1) and (2) can be satisfied).

Further, when intending to cause to contain a particular element in a high concentration, it is sometimes impossible to obtain single-layer structure by solely increasing the contents of the particular element, alone. In accordance with the material design of the present invention, single-layer compound containing a particular element in a high concentration can be obtained by adjusting the contents of the other elements so that the composition is in the range, where the garnet structure can be taken (the above formulae (1) and (2) can be satisfied).

(composition of the present invention)

Composition of the present invention is characterized to include a garnet-type compound satisfying the above formulae (1) and (2), preferably the above formulae (1) and (2A).

The composition of the present invention may include a component other than a garnet-type compound of the present invention. For example, as the composition of the present invention, those where powdered garnet-type compound of the present invention is dispersed in a medium like light transmitting resin such as (meth)acrylate resin, glass, water or an organic solvent can be shown. When such a composition is to be manufactured, the powdered garnet-type compound of the present invention may be prepared in advance and may be dispersed in the above medium or may be separated in the above medium.

When the garnet-type compound of the present invention is a light emitting compound, a light emitting composition can be provided.

When the garnet-type compound of the present invention is a magnetic compound, a magnetic composition can be provided.

(molded body)

The molded body of the present invention includes a garnet-type compound satisfying the above formulae (1) and (2), preferably the above formulae (1) and (2A), and is of a predetermined shape.

As the molded body of the present invention, those where a single crystal body of a garnet-type compound of the present invention, a polycrystalline body of a garnet-type compound of the present invention or powders of a garnet-type compound of the present invention are dispersed in a solid medium like light transmitting resin such as (meth) acrylate resin or glass can be shown.

Taking into account the light transmissivity (transparency), in the molded bodies where the particles of the garnet-type compound of the present invention are dispersed in the solid medium, the average diameter of the garnet-type compound of the present invention is preferably sufficiently smaller than the wavelength of light and preferably is not larger than 1000nm (especially preferably not larger than several tens of nm.

The shape of the molded body of the garnet-type compound of the present invention may be any and shapes like a pellet, a disk or a rod can be shown. In the case of the molded bodies where the particles of the garnet-type compound of the present invention are dispersed in the solid medium, the molded bodies may be of a fiber.

When the garnet-type compound of the present invention is a light emitting compound, a light emitting body which emits light in response to projection of exciting light can be provided by the molded body of the present invention.

When the garnet-type compound of the present invention is a magnetic compound, a magnetic body can be provided by the molded body of the present invention.

(film forming substrate)

The first film forming substrate of the present invention includes a garnet-type compound satisfying the above formulae (1) and (2), preferably the above formulae (1) and (2A).

The second film forming substrate of the present invention includes a garnet-type compound which satisfies the above formulae (1) and (2), preferably the above formulae (1) and (2A) and where at least one kind of element selected from the group consisting of La, Nd, Sm and Gd is included in the A site, Sc and/or Ga are included in the B site, and Ga is included in the C site.

As the first and second film forming substrates, a single crystal substrate or a polycrystalline substrate of the garnet-type compound of the present invention can be shown. The first and second film forming substrates of the present invention can be used in various applications in an electronic device or an optical device as those for gas phase film formation or liquid phase film formation.

The second film forming substrate may be suitably used as a substrate for a magnetic garnet-type ferrite represented by YIG ($Y_3Fe_5O_{12}$). As a substrate for the YIG, a single crystal substrate of $Gd_3Ga_2Ga_3O_{12}$ which is high in quality of the crystal and easy to align the lattice has been often employed. In a substituted magnetic garnet-type ferrite such as ($Y3-xBix)O12$ obtained by substituting a part of the A site of the YIG, the angle of Faraday rotation can be larger than in the YIG. As a substrate for a substituted magnetic garnet-type ferrite, the substrate is necessary to have a suitable lattice constant matched with that of the substituted magnetic garnet-type ferrite and it is preferable to use a substrate whose lattice constant is adjusted by, for instance, changing ions forming the A to C sites of $Gd_3Ga_2Ga_3O_{12}$.

(light emitting system)

The light emitting system of the present invention comprises a light emitting body including a garnet-type compound of the present invention and an exciting light source projecting exciting light onto the light emitting body.

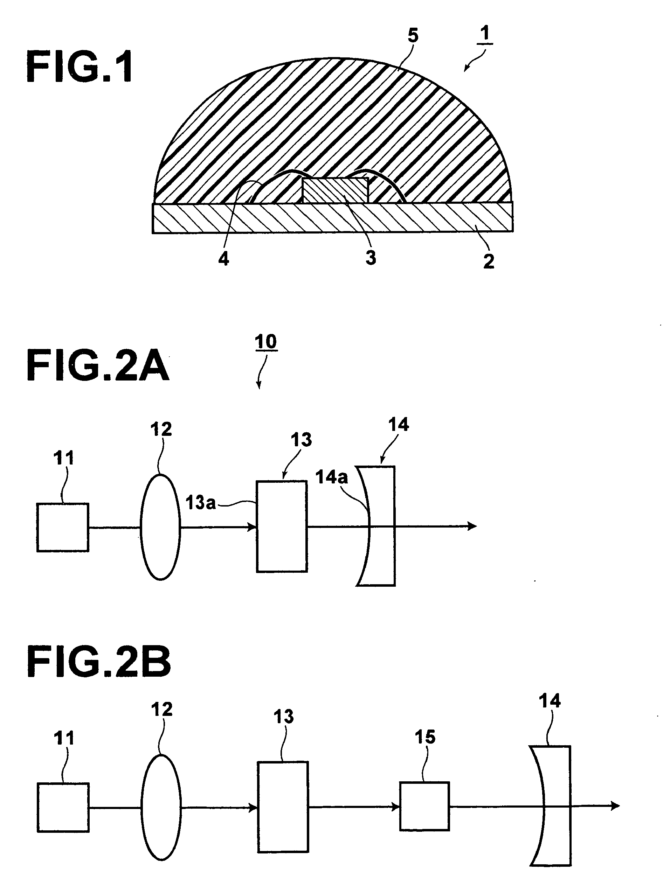

A light emitting system in accordance with an embodiment of the present invention will be described with reference to Figure 1, hereinbelow. Figure I is a cross-sectional view in the direction of thickness of a circuit board 2.

In the light emitting system 1 of this embodiment, a light emitting element 3, which is an exciting light source, is mounted on the center of the surface of a disc-like circuit board 2 and a dome-like light emitting body 5 is molded on the circuit board 2 to surround the light emitting element 3. The light emitting element 3, which emits exciting light to excite the light emitting body 5, comprises a semiconductor light emitting diode or the like and is electrically connected to the circuit board 2 by way of the bonding wire 4.

In this embodiment, the light emitting body 5 is a molded body where ground products of the sintered polycrystalline body of the garnet-type compound of the present invention, which is a light emitting compound, are dispersed in light transmitting resin such as (meth)acrylate resin. The light emitting body 5 can be molded by milling sintered polycrystalline bodies of a garnet-type compound of the present invention in a mortar to obtain ground products, kneading the ground products together with light transmitting resin such as (meth) acrylate resin with the resin fused to obtain a mixture (e.g., a garnet-type compound of the present invention:PMMA resin=3:4 in ratio of mass), and carrying out injection molding with a circuit board 2 mounted with a light emitting element 3 placed in the mold.

As garnet-type compound which is a light emitting compound, Pr-containing garnet-type compounds such as Pr:LLGG (compound 1), Pr:YSGG (compound 2), Pr:GGGG (compound 3), Pr:LSGG (compound 4), Pr:GSGG (compound 5), Pr:YGGG (compound 6) and Pr: (LY) SGG (compound 7) can be shown. Such Pr-containing garnet-type compounds emit fluorescent light in a visible region (400 to 700nm) excited by light of 300 to 500nm and emit fluorescent light in an ultraviolet to visible region (250 to 700nm) excited by ultraviolet rays or radiations. Accordingly, a exciting light source only has to be selected according to a desired light emitting wavelength. In this case, for example, nitride series semiconductor light emitting diodes (oscillation peak wavelength: 360 to 500nm) provided with an active layer including one kind or more nitride-containing semiconductor compound such as GaN, ALGaN, InGaN, InGaNAs, GaNAs or the like, ZnSSe series semiconductor light emitting diodes (oscillation peak wavelength:450 to 520nm) and ZnO series semiconductor light emitting diodes (oscillation peak wavelength:360 to 450nm) are preferably used.

In this embodiment, light different from emanating light from the light emitting element 3 in color tone is emitted from the light emitting body 5 and light in which the color of emanating light from the light emitting element 3 is mixed with the color of light emitted from the light emitting body 5 is emitted from the light emitting system 1.

The light emitting system of this embodiment is provided with a light emitting body 5 including the garnet-type compound of the present invention. In this embodiment, as shown in Figures 9 and 10, a light emitting system 1 which is excellent in light emission characteristics such as the intensity of the fluorescence can be obtained even in the range where preferably the garnet structure can be taken (the above formulae (1) and (2) can be satisfied) by selecting a range but a peripheral range (near the border between the range where the single layer structure can be taken and the range where the single layer structure cannot be taken).

The light emitting system 1 can be preferably used as a white light emitting diode and the like.

(solid laser)

The solid laser of the present invention is provided with a solid laser medium comprising a light emitting body including a garnet-type compound of the present invention and an exciting light source projecting exciting light onto the solid laser medium.

A solid laser in accordance with an embodiment of the present invention will be described with reference to Figure 2A, hereinbelow.

The solid laser in accordance with an embodiment of the present invention is a laser-diode-exciting solid laser provided with a solid laser medium 13 comprising a light emitting body including a garnet-type compound of the present invention which is a light emitting compound, and a semiconductor laser diode 11 which is an exciting light source projecting exciting light onto the solid laser medium 13.

A collecting lens 12 is disposed between the semiconductor laser diode 11 and the solid laser medium 13 and an output mirror 14 is disposed behind the solid laser medium 13.

A coating which transmits light of an exciting wavelength and reflects light of an output wavelength is provided on the exciting light inlet face 13a of the solid laser medium 13. A coating which transmits a part of light of an output wavelength and reflects the other light is provided on the light inlet face 14a of the output mirror 14. A resonator is formed between the light inlet face 13a of the solid laser medium 13 and the light inlet face 14a of the output mirror 14.

As garnet-type compound which is a light emitting compound, Pr-containing garnet-type compounds such as Pr:LLGG (compound 1), Pr:YSGG (compound 2), Pr:GGGG (compound 3), Pr:LSGG (compound 4), Pr:GSGG (compound 5), Pr:YGGG (compound 6) and Pr:(LY)SGG (compound 7) can be shown.

Such Pr-containing garnet-type compounds emit fluorescent light in a visible region (400 to 700nm) excited by light of 300 to 500nm and emit fluorescent light in an ultraviolet to visible region (250 to 700nm) excited by ultraviolet rays or radiations. Accordingly, a exciting light source only has to be selected according to a desired light emitting wavelength. In this case, as the semiconductor laser diode 11 which is an exciting light source, for example, nitride series semiconductor diodes (oscillation peak wavelength:360 to 500nm) provided with an active layer including one kind or more nitride-containing semiconductor compound such as GaN, ALGaN, InGaN, InGaNAs, GaNAs or the like, ZnSSe series semiconductor diodes (oscillation peak wavelength: 450 to 520nm) and ZnO series semiconductor diodes (oscillation peak wavelength:360 to 450nm) are preferably used.

In the solid laser of this embodiment, the solid laser medium 13 is excited by a semiconductor laser 11 and light different from emanating light from the light emitting element 3 in color tone is oscillated from the solid laser 10.

In the solid laser 10 of this embodiment, the wavelength of the output light can be changed by, for instance, changing coatings provided on the exciting light inlet face 13a of the solid laser medium 13 and on the light inlet face 14a of the output mirror 14 or the exciting light source.

The solid laser 10 in accordance with an embodiment of the present invention uses a solid laser medium 13 comprising a garnet-type compound of the present invention. In this embodiment, as shown in Figures 9 and 10, a solid laser 10 which can output a brighter laser beam can be obtained even in the range where preferably the garnet structure can be taken (the above formulae (1) and (2) can be satisfied) by selecting a range but a peripheral range (near the border between the range where the single layer structure can be taken and the range where the single layer structure cannot be taken).

(example of design change)

The solid laser 10 of this embodiment need not be limited to then above embodiment but design thereof may be changed if desired. For example, a wavelength converter 15 such as a nonlinear optical crystalline body may be disposed between the solid laser medium 13 and the output mirror 14 so that the laser beam oscillated from the solid laser medium 13 is converted in wavelength to a shorter wavelength, for instance, to the second harmonic and is emitted. The optical wavelength converter 15 may be disposed either inside the resonator or outside the resonator.

Though an so-called end-pump type has been described in this embodiment, the solid laser 10 of the present invention can be applied to the side-pump type.

(fiber laser & fiber amplifier)

By separating fine particles of the garnet-type compound of the present invention which is a light emitting compound in a fiber material such as $SiO_2$ series glasses, fluoride series glasses, chalcogenide series glasses, or a (meth) acrylate resin, a dispersion where a garnet-type compound of the present invention is dispersed in such a medium is obtained. When making the core of an optical fiber by the use of this material, a light emitting ion doped optical fiber having a core including a garnet-type compound of the present invention which is a light emitting compound can be obtained.

In this embodiment, as shown in Figures 9 and 10, light emitting ion doped optical fiber which can output a brighter laser beam can be obtained even in the range where preferably the garnet structure can be taken (the above formulae (1) and (2) can be satisfied) by selecting a range but a peripheral range (near the border between the range where the single layer structure can be taken and the range where the single layer structure cannot be taken).

A fiber laser and/or a fiber amplifier outputting a highly bright light can be formed by connecting a plurality of exciting light sources or a single exciting light source to the light emitting ion doped optical fiber.

(ionizing radiation detecting system)

The ionizing radiation detecting system of the present invention comprises a scintillator having a light emitting body including a garnet-type compound of the present invention and a scintillation light detector which detects light emitted from the scintillator. As the scintillation light detector, for instance, a photodiode, photomultiplier and an image taking element (CCD) can be shown. As the ionizing radiation, X rays and $\gamma$ rays can be shown.

The ionizing radiation detecting system of the present invention comprises a scintillator including a garnet-type compound of the present invention which is a light emitting compound. In this invention, as shown in Figures 9 and 10, the amount of light emitted from the scintillator can be increased to improve the sensitivity even in the range where preferably the garnet structure can be taken (the above formulae (1) and (2) can be satisfied) by selecting a range but a peripheral range (near the border between the range where the single layer structure can be taken and the range where the single layer structure cannot be taken).

The ionizing radiation detecting system of the present invention can form a tomography system by combining an ionizing radiation source (X-ray source or the like) and a computer for data processing, as necessary.

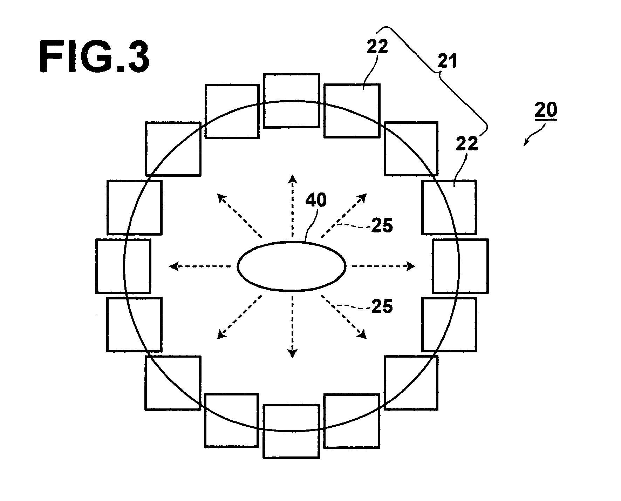

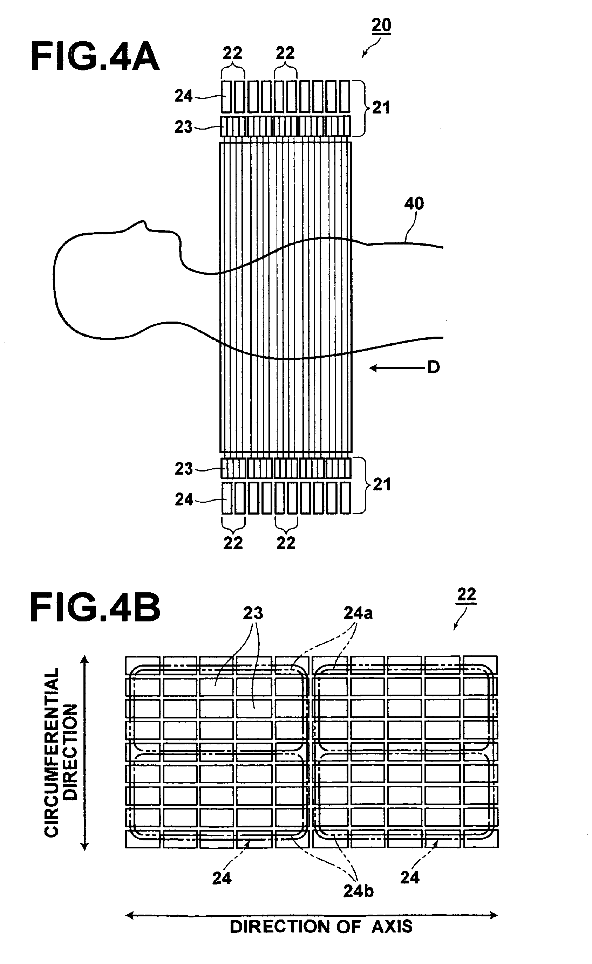

An example of a positron emission tomography system (PET) provided with an ionizing radiation detecting system of the present invention will be described with reference to Figures 3, 4A and 4B, hereinbelow. In the figures, reference numeral 40 denotes a sample to be examined. The description will be made when the sample 40 is a human body.

Figure 3 is a view of the tomography system 20 as seen from the head side of the sample 40, Figure 4A is a view of the tomography system 20 as seen from a side of the sample 40, and Figure 4B is a view showing arrangement of the scintillator 23 and the photomultiplier 24 in one block of $\gamma$ ray detecting system 22.

In tomography by the use of the positron emission tomography system 20, the sample 40 is caused to take a positron emission agent such as fluorodeoxyglucose to generate positrons in the sample 40, and $\gamma$ rays 25 generated from the generated positrons are detected, whereby a tomographic image is obtained.

The positron emission tomography system 20 substantially comprises a $\gamma$ ray detecting unit 21 where a number of $\gamma$ ray detecting systems (ionizing radiation detecting systems) 22 are arranged in a ring into a unit, and a computer (not shown) for data processing.

The sample 40 is placed at the center of the $\gamma$ ray detecting unit 21 to be relatively scanned in the direction of body axis D to the $\gamma$ ray detecting unit 21.

In the $\gamma$ ray detecting unit 21, a plurality of $\gamma$ ray detecting systems 22 are arranged substantially in a ring and a plurality of units of $\gamma$ ray detecting systems 22 arranged substantially in a ring are disposed in the direction of body axis D of the sample 40. The number of the $\gamma$ ray detecting systems 22 and the pattern of arranging them may be changed. For example, the $\gamma$ ray detecting systems 22 are 100 blocks in the circumferential direction and 5 blocks in the direction of body axis D (Figures are simplified).

In the positron emission tomography system 20, when a sample 40 is in a relative position in the direction of body axis D to the $\gamma$ ray detecting unit 21, $\gamma$ rays 25 generated in the directions of 360° of the sample 40 are detected by the $\gamma$ ray detecting unit 21 including a plurality of the $\gamma$ ray detecting systems 22 arranged in the circumferential direction, whereby a tomographic image in the relative position can be obtained. The number of cross-sections detected at this time is, for instance, 2500 layers. By similar detections while relatively scanning the sample 40 in the direction of body axis D to the $\gamma$ ray detecting unit 21, a three-dimensional cross-sectional image can be obtained.

An individual $\gamma$ ray detecting systems 22 ($\gamma$ ray detecting system 22 in one block) substantially comprise a scintillator 23 comprising a light emitting body including a garnet-type compound of the present invention, and a photomultiplier 24 which detects light emitted from the scintillator 23.

In the positron emission tomography system 20, when $\gamma$ rays 25 impinges upon the scintillator 23, light in an ultraviolet to visible region is generated and the generated light is converted to an electric signal and detected by the photomultiplier 24.

The number of the scintillators 23 and the photomultiplier 24 forming the individual $\gamma$ ray detecting systems 22and the pattern of arranging them are suitably designed. In the example shown in Figure 4B, the scintillators 23 are in 9x10 (in the circumferential direction and in the direction of body axis D) and two photomultipliers 24 with two rectangular elements 24a and 24b are disposed in the direction of body axis to generally surround the scintillators 23 (in Figure 4A, the pattern of arrangement is simplified).

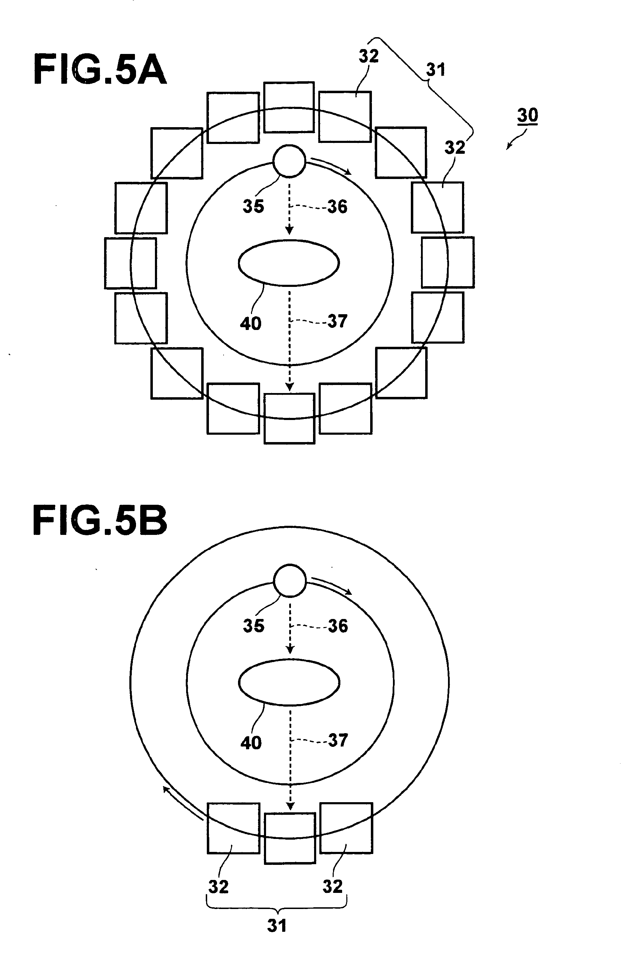

An example of the X ray tomography system will be described with reference to Figure 5A. Figure 5A is a view similar to Figure 3 and accordingly, the elements analogous to those in Figure 3 will be given the same reference numerals and will not be described.

The x-ray detecting system 30 substantially comprises an X ray detecting unit 31 where a number of X ray detecting systems (ionizing radiation detecting systems) 32 are arranged in a ring into a unit, an X ray source 35 and a computer (not shown) for data processing.

The sample 40 is placed at the center of the X ray detecting unit 31 to be relatively scanned in the direction of body axis to the X ray detecting unit 31.

In the X ray detecting unit 31, a plurality of X ray detecting systems 32 are arranged substantially in an ellipsoid and a plurality of units of X ray detecting systems 22 arranged substantially in an ellipsoid are disposed in the direction of body axis D of the sample 40. The number of the X ray detecting systems 32 and the pattern of arranging them may be changed. For example, the X ray detecting systems 32 are 100 blocks in the circumferential direction and 5 blocks in the direction of body axis. (Figures are simplified)

The X ray source 35 is disposed between the X ray detecting unit 31 and the sample 40 for rotation in the circumferential direction.

In the x-ray detecting system 30, X rays 36 are projected onto the sample 40 from the X ray source 35, and transmitted X rays 37 which are transmitted through the sample 40 are detected by the X ray detecting system 32 opposite to the X ray source 35 as seen from the sample 40. When the sample 40 is in a relative position in the direction of body axis with respect to the X ray source 35 and the X ray detecting unit 31, the X ray source 35 is rotated in the circumferential direction and the transmitted X rays 37 are detected by the X ray detecting unit 31 including a plurality of the X ray detecting systems 32 arranged in the circumferential direction, whereby a tomographic image in the relative position can be obtained. By similar detections while relatively scanning the sample 40 in the direction of body axis to the X ray detecting unit 31 and the X ray source 35, a three-dimensional cross-sectional image can be obtained.

The inner structure of each X ray detecting system 32 is the same as the γ ray detecting systems 22 of the positron emission tomography system 20 shown in Figures 3, 4A and 4B, That is, each X ray detecting systems 32 substantially comprises a scintillator 23 comprising a light emitting body including a garnet-type compound of the present invention, and a photomultiplier (a scintillation light detector) 24 which detects light emitted from the scintillator 23. (not shown. See Figures 4A and 4B.)

In the x-ray detecting system 30, the X ray detecting systems 32 may be reduced in number and may be rotated in the circumferential direction in synchronization with the X ray source 35 to detect the X rays as shown in Figure 5B.

Since being provided with the ionizing radiation detecting system of the present invention, the positron emission tomography system 20 and the x-ray detecting system 30 shown in Figures 3, 4A and 4B, and 5A and 5B can obtain a tomographic image at a high sensitivity.

(optical isolator & optical circulator)

An optical isolator or an optical circulator of the present invention comprises a magnetic body including a garnet-type compound of the present invention which is a magnetic compound.

Since a magnetic compound excellent in the characteristics such as the coefficient of Faraday rotation can be easily designed, an optical isolator or an optical circulator which is high in performance can be provided in accordance with the present invention.

(optical element such as lens)

In accordance with the present invention, there can be provided with a molded body (a single crystal body or a polycrystalline body comprising a garnet-type compound of the present invention) containing a garnet-type compound of the present invention which is excellent in transparency and has a high refractive index. Since such a molded body is excellent in transparency and in such a molded body, high refractivity and low dispersion are compatible with each other, when the molded body is used as an optical element such as a lens or a half-silvered mirror, the optical systems or the optical devices on which the optical element is mounted can be smaller in size.

The compound, composition and the molded body can be used in various applications without limited to the applications described above.

(examples)

Embodiments of the present invention and comparative examples will be described, hereinbelow.

(embodiment 1)

This inventor has calculated rA, rB and rA/rB of compounds 1 to 126 represented by general formula $A_3B_2C_3O_{12}$. Further, the lattice constant a of each compound was obtained by measurement or a calculation by the use of a formula disclosed in "LANDORT-BORNSTEIN Group III 12a (Garnets and Perovskites), (1.1.3:Lattice parameters of garnets) ", pp. 22-23, Springer-Verlag Berlinh, Heiderberg, New York, 1978.

The compounds are listed in the following table 1. Those listed in the following table 1 as compounds 7 and 80 are novel compositions. In the compounds shown in table 1, the compounds 1 to 7, 77 to 80, 112 to 115 and 117 to 120 are actually prepared by this inventor.

<preparation of compound 1>

A sintered polycrystalline body of compound 1 (Pr:LLGG-2.7) whose composition was represented by a formula $(La_{2.67}Lu_{0.3}Pr_{0.03})Lu_2Ga_3O_{12}$ was prepared in the following procedure.

Powders of $La_2O_3$ (99.99% in purity), $Lu_2O_3$ (99.99% in purity), $Ga_3O_3$ (99.99% in purity) and $Pr_6O_{11}$ (99.99% in purity) were first weighed so that a desired composition was obtained. The composition of the raw material powders were 43.496g of $La_2O_3$ powder, 45.762g of $Lu_2O_3$ powder, 28.117g of $Ga_3O_3$ powder, and 0.511g of $Pr_6O_{11}$ powder.

The raw material powders were placed in a pot mill together with ethanol and a alumina ball for mixing, and wet mixing was carried out for 12 hours. Then the alumina ball was removed and the ethanol in the obtained slurry of the mixed powders was removed by the use of a rotary evaporator. The slurry was dried for 12 hours at 100°C in a mortar and the obtained dry powder was lightly unbound. About 1.3g of the obtained dry powder was uniaxial-compression-molded at a molding pressure of 100MPa into a pellet 10mmφ in diameter (cylindrical, height was suitably set according to the sample).

Obtained compression-molded body was heated to 1450°C at 500°C /hr in an electric oven under the atmospheric atmosphere. Then it was held at the temperature for 2 hours and cooled to 1000°C at 500°C /hr and naturally cooled. Thus, a tentative firing process was carried out.

The tentative sintered body cooled to the normal temperatures was ground by the use of an alumina mortar and an alumina pestle was again uniaxial-compression-molded at a molding pressure of 100MPa into a pellet 10mmφ in diameter (cylindrical, height was suitably set according to the sample).

Obtained re-compression-molded body was heated to 1550°C at 500°C /hr in an electric oven under the atmospheric atmosphere. Then it was held at the temperature for 2 hours and cooled to 1000°C at 500°C /hr and naturally cooled. Thus, a firing process was carried out to obtain a polycrystalline sintered body of the above composition (Pr: LLGG-2.7).

<X ray diffraction (XRD) measurement of powder of compound 1>

Prepared polycrystalline sintered body of compound 1 was ground by the use of an alumina mortar and an alumina pestle and powder X ray diffraction (XRD) measurement was carried out thereon, whereby the sample was identified.

The sample had a diffraction peak which substantially conforms to the known cubic crystal of $(La_{2.7}Lu_{0.3})Lu_2Ga_3O_{12}$ [non-doped LLGG-2.7] ("Journal of Solid State Chemistry 8, 357 (1973), PDF#27-0227) and it was confirmed that the sample had a single crystal structure. Figure 14 shows the XRD pattern of the compound 1.

<Calculation of the lattice constant a of the compound 1>

The lattice constant a of the polycrystalline sintered body of the compound 1 thus prepared was calculated from the result of the XRD measurement. That is, the peak value of diffraction at an angle e.g., 2θ=100 to 150° was obtained by a tangential method and a precise lattice constant a was calculated by the use of a Nelson-Riley function. The lattice constant a was 12.9940Å.

<compounds 2 to 7, 77 to 80>

Polycrystalline sintered bodies of the compounds 2 to 7, and 77 to 80 were obtained in the same manner as in the above compound 1 except that the composition of the raw material powder was changed. The firing temperature was as shown in table 2.

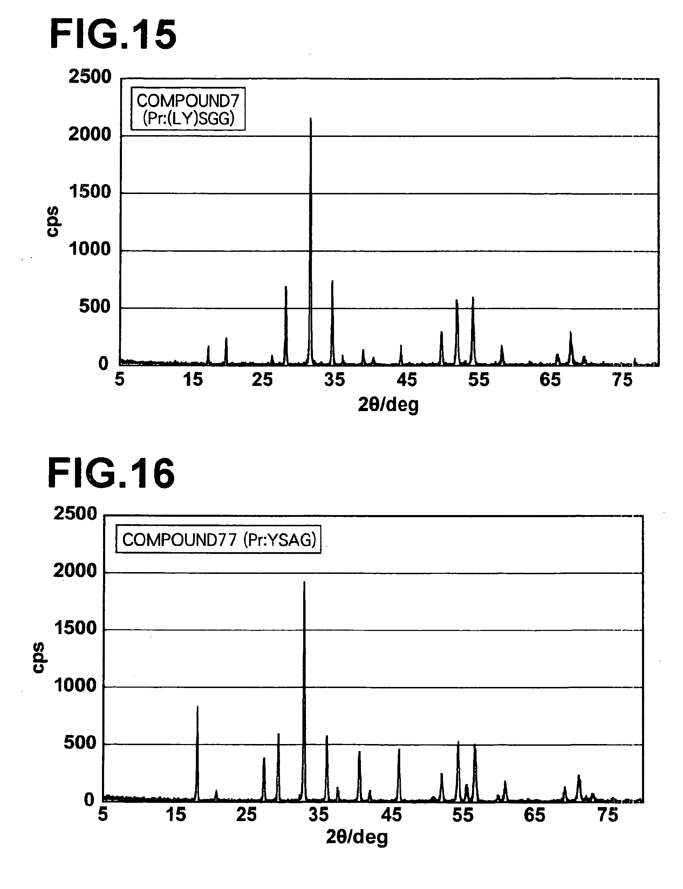

For the compounds 2 to 7, and 77 to 80, X ray diffraction (XRD) measurement was carried out in a similar manner and it was confirmed that each of the compounds 2 to 7, and 77 to 80 had a single crystal structure. Then the lattice constant a of the polycrystalline sintered bodies of the compounds 2 to 7, and 77 to 80 was calculated in the same manner as in the above compound 1. Figures 15 and 16 respectively show the XRD patterns of the compounds 7 and 77 as representatives. The compounds were novel.

<preparation of compound 114>

Polycrystalline sintered body of the compound 114 (LLGG-3.0) whose composition was represented by a formula $La_3Lu_2Ga_3O_{12}$ was tried to prepare in the same manner as in the above compound 1 except that the composition of the raw material powder was changed. The firing temperature was as shown in table 2.

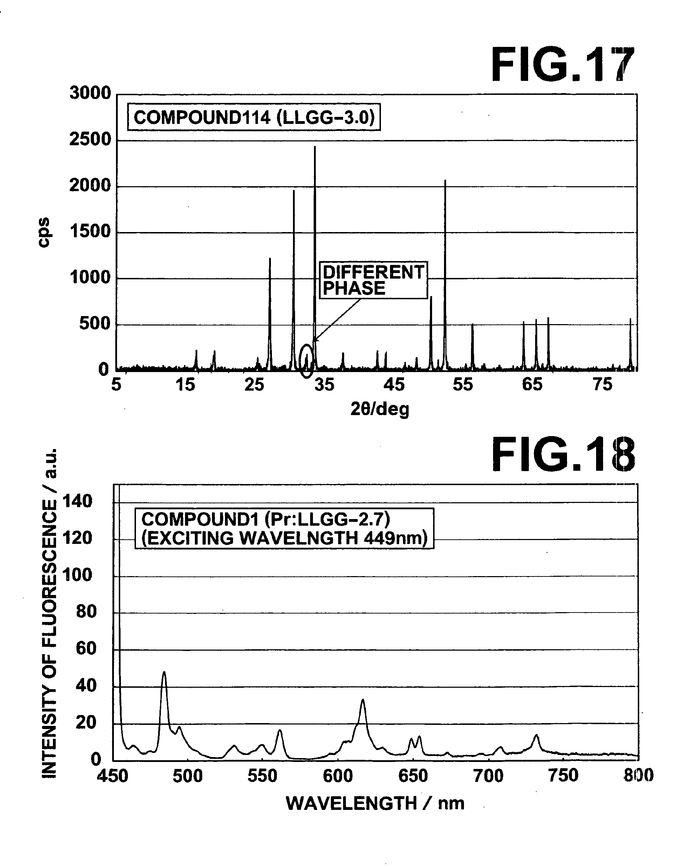

When X ray diffraction (XRD) measurement was carried out for the obtained sintered body, a different phase was viewed. Figure 17 show the XRD pattern of the compound.

Since the proportion of the different phase was relatively small, the lattice constant a was calculated. The lattice constant a was calculated to be 13.0340Å. The compound actually obtained was estimated to be $(La_{3-\delta}Lu_{\delta})Lu_2Ga_3O_{12}$ where a slight amount of Lu is solid-solved in the A site. Since the ionic radius of La was larger than that of Lu, it was conceivable that the lattice constant larger than 13.0340Å had been expected to LLGG-3.0. From this result, it is conceivable that there is no garnet-type compound larger than 13.0340Å in the lattice constant a.

<compounds 112, 113, 115, 117 to 120>

Polycrystalline sintered body of the compounds 112, 113, 115, 117 to 120 whose compositions were as shown in the table were tried to prepare in the same manner as in the above compound 1 except that the compositions of the raw material powder were changed. The firing temperatures were as shown in table 2.

When X ray diffraction (XRD) measurement was carried out for each of the obtained sintered bodies in the same manner as in the above compound 114, a different phase was viewed. The lattice constants a of these compound were obtained by calculation.

<other compounds>

rA, rB rA/rB and lattice constant a of each of other compounds which were not prepared were obtained by calculation and whether there was a different phase was determined through the views of phase.

<result>

Result of obtaining rA, rB rA/rB and lattice constant a for each compound and determination whether there was a different phase were shown in the following table 1.

Further, Figure 6 is a view plotting (rA, rB) each of the compounds with the value of rA taken as the x coordinate and the value of rB taken as the y coordinate. In Figure 6, sign • represents those where the single-phase structure was obtained, and sign ▲ represents those where a different phase was viewed.

In Figure 6, straight lines whose rB/rA=0.50 (the lower limit in the formula (1)), rB/rA=0.86 (the upper limit in the formula (1)), a=11.70 (the lower limit in the formula (2)), a=11.90 (the lower limit in the formula (2A)) and a=13. 02 (the upper limit in the formula (2)), respectively are depicted. As can be seen from Figure 6, the single-phase structure was obtained substantially in the range where the following formulae (1) and (2) (preferably the following formulae (1) and (2A)) are satisfied.

$$0.50 \leq rB/rA \leq 0.86 \quad \cdots \quad (1)$$

$$11.70 \leq a \leq 13.02 \quad \cdots \quad (2)$$

$$11.90 \leq a \leq 13.02 \quad \cdots \quad (2A)$$

Out of the compounds plotted in Figure 6, only the compounds, where the C site comprises Ga (general formula $A_3B_2Ga_3O_{12}$), are taken and are plotted in Figure 7 in the same manner as in Figure 6. Similarly, out of the compounds plotted in Figure 6, only the compounds, where the C site comprises Al, are taken and are plotted in Figure 8 in the same manner as in Figure 6.

As can be seen from Figure 7, in the compounds, where the C site comprises Ga (general formula $A_3B_2Ga_3O_{12}$), the single-phase structure was obtained substantially in the range where the following formulae (1A) and (2B) (preferably the following formulae (1A) and (2C)) are satisfied.

$$0.55 \leq rB/rA \leq 0.86 \quad \cdots \quad (1A)$$

$$12.10 \leq a \leq 13.02 \quad \cdots \quad (2B)$$

$$12.20 \leq a \leq 13.02 \quad \cdots \quad (2C)$$

As can be seen from Figure 8, in the compounds, where the C site comprises Al (general formula $A_3B_2Al_3O_{12}$), the single-phase structure was obtained substantially in the range where the following formulae (1B) and (2D) (preferably the following formulae (1C) and (2E)) are satisfied.

$$0.50 \leq rB/rA \leq 0.82 \quad \cdots \quad (1B)$$

$$0.50 \leq rB/rA \leq 0.77 \quad \cdots \quad (1C)$$

$$11.70 \leq a \leq 12.60 \quad \cdots \quad (2D)$$

$$11.90 \leq a \leq 12.50 \quad \cdots \quad (2E)$$

(embodiment 2)

The polycrystalline sintered body of the compound 1 out of the compounds prepared in embodiment 1 was measured with its fluorescence spectrum (emission spectrum) with spectrofluorometer F-4500. The exciting wavelength $\lambda$ex was 449nm and 284nm at which the second strongest and strongest fluorescence were respectively exhibited when an exciting spectrum was taken. In either of the exciting wavelength of 449nm (visible excitation) and the exciting wavelength of 284nm (ultraviolet excitation), a number of fluorescence peaks are viewed over the entire area of a visible region (400 to 700nm) and the peak viewed at the wavelength of 484nm is the strongest. The fluorescence spectrum when the exciting wavelength is 449nm is shown in Figure 18.

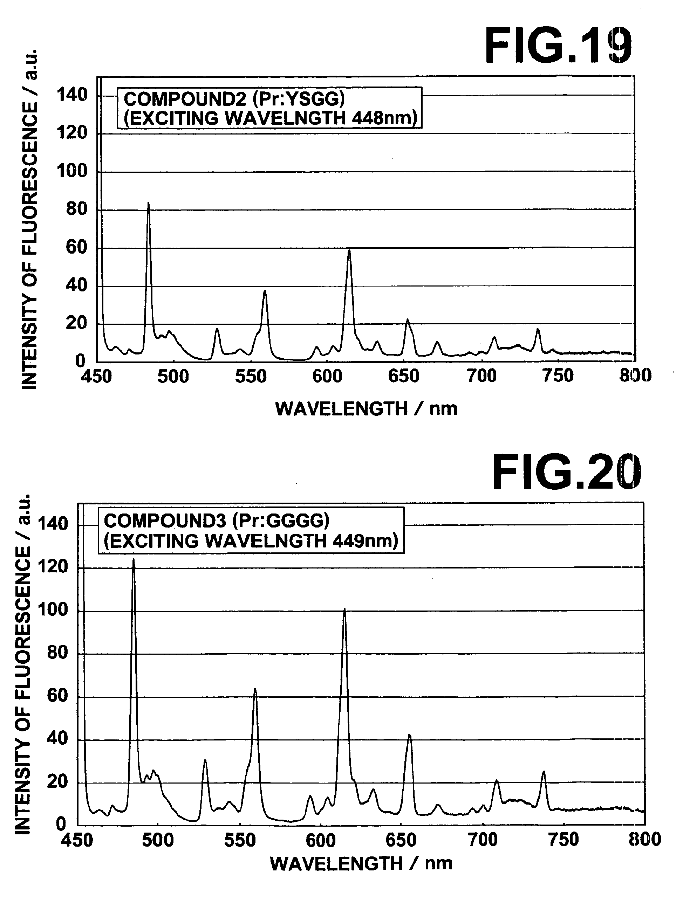

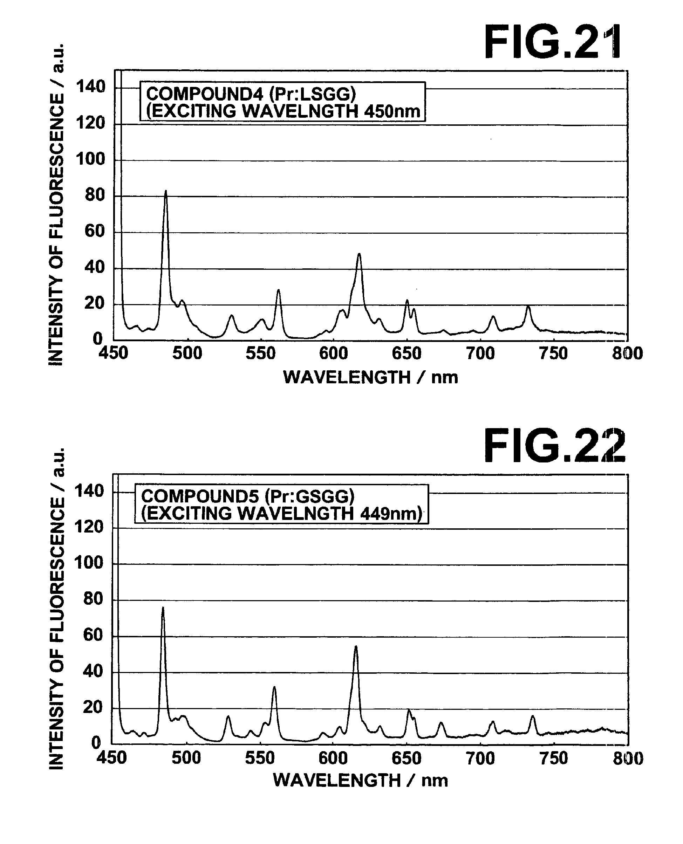

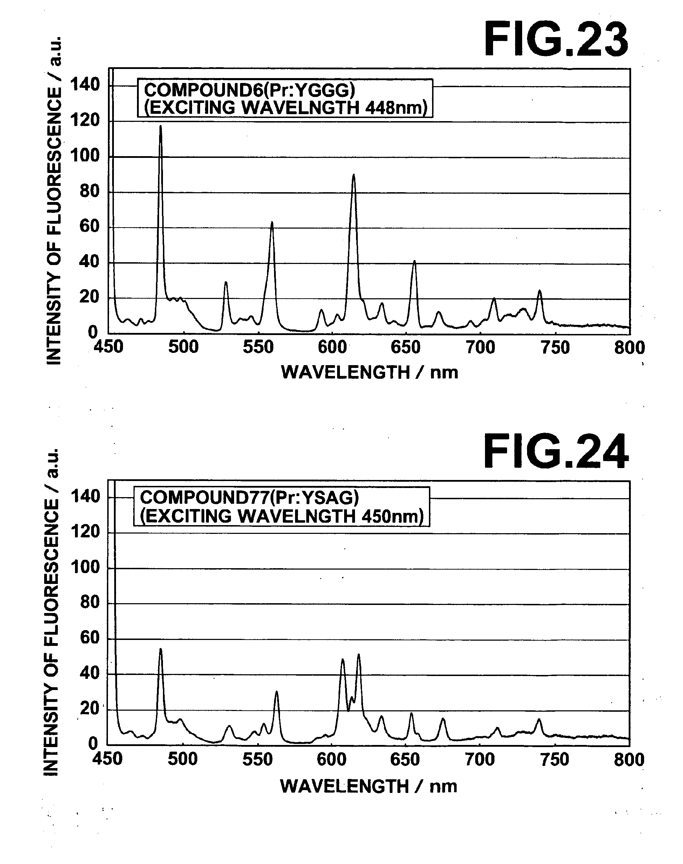

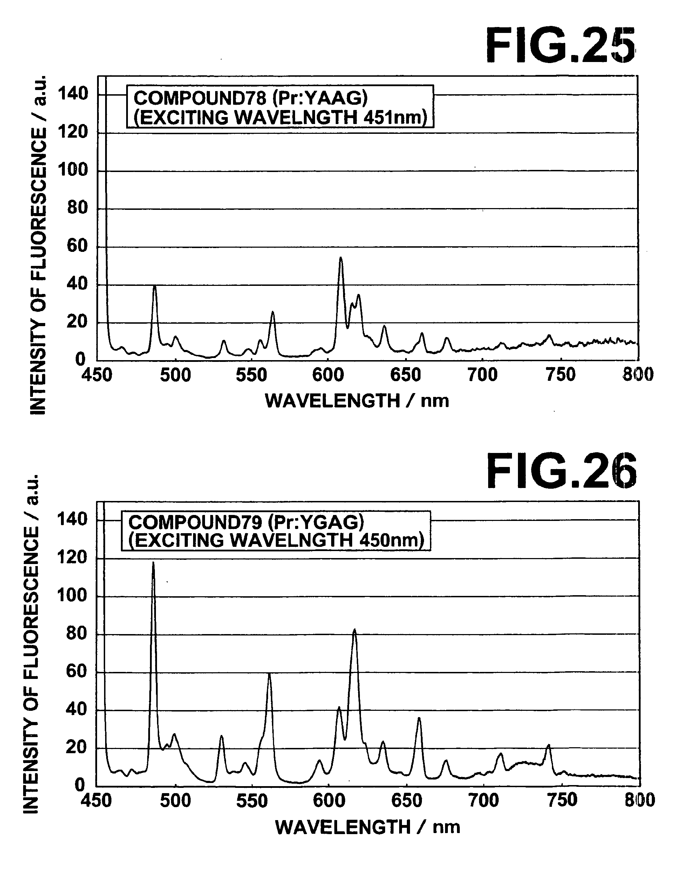

The fluorescence spectrum measurement was carried out on the compounds 2 to 6 and 77 to 79 when they were excited at an excitation peak wavelengths near 450nm and near 290nm. Obtained fluorescence spectra are shown in Figures 19 to 26.

The excitation peak wavelength in the visible region, the peak wavelength at which the fluorescence was the strongest, the intensity of the fluorescence at the strongest fluorescence peak wavelength when they were excited at an excitation peak wavelengths near 450nm and the intensity of the fluorescence at the strongest fluorescence peak wavelength when they were excited at an excitation peak wavelengths near 290nm are shown in the following table 3. The intensity of the fluorescence is shown in a relative value with the intensity of the fluorescence of the compound 1 (Pr:LLGG-2.7) taken as 1.

Figure 9 is a view plotting the compounds 1 to 6, where the C site comprises Ga, in the same manner as in Figure 6, and at the same time, showing the intensity of fluorescence of each compound. Figure 10 is a view plotting the compounds 77 to 79, where the C site comprises Al, in the same manner as in Figure 6, and at the same time, showing the intensity of fluorescence of each compound. The values of the intensity of fluorescence in Figures 9 and 10 are those shown in the table 3.

As shown in Figure 9, in the compounds where the C site comprises Ga (represented by a general formula $A_3B_2Ga_3O_{12}$), an intensity of fluorescence higher than that of Pr:LLGG-2.7 can be obtained in the range where the following formulae (1D) and (2F) are satisfied.

$$0.56 \leq rB/rA \leq 0.75 \quad \cdots \quad (1D)$$

$$12.30 \leq a \leq 12.83 \quad \cdots \quad (2E)$$

As shown in Figure 10, in the compounds where the C site comprises Al (represented by a general formula $A_3B_2Al_3O_{12}$), a higher intensity of fluorescence can be obtained in the range where the following formulae (1E) and (2G) are satisfied.

$$0.53 \leq rB/rA \leq 0.75 \quad \cdots \quad (1E)$$

$$12.00 \leq a \leq 12.40 \quad \cdots \quad (2G)$$

(embodiment 3)

Out of the compounds prepared in the embodiment 1, only the compounds 109 to 111 and 126, which are Fe-containing magnetic compounds, are taken and are plotted in Figures 11 and 12 in the same manner as in Figure 6. In the figures, sign • represents those where the single-phase structure was obtained, and sign ▲ represents those where a different phase was viewed.

As shown in Figures 11 and 12, in the Fe-containing magnetic compounds (M-1) where Y and/or Bi is contained in the A site and Fe is contained in the B site and/or C site, a single-phase structure is obtained in the range where the following formulae, (1), (2), (3) and (4) (preferably (1), (2), (3A) and (4)) are satisfied.

$$0.50 \leq rB/rA \leq 0.86 \quad \cdots \quad (1)$$

$$11.70 \leq a \leq 13.02 \quad \cdots \quad (2)$$

$$1.00 \leq rA \leq 1.20 \quad \cdots \quad (3)$$

$$1.06 \leq rA \leq 1.20 \quad \cdots \quad (3A)$$

$$0.53 \leq rB \quad \cdots \quad (4)$$

The composition of the compound 109 is YIG ($Y_3Fe_5O_{12}$) used in the optical isolator or the optical circulator. There is known that, in the YIG, by substituting a part of Y for Bi, the coefficient of Faraday rotation can be in creased. The composition of the compound 126 is a composition where the A site of the YIG is entirely substituted for Bi. In such a composition, the range is out of a range where the formulae (1) and (2) are satisfied and a single-phase structure cannot be obtained. Accordingly, it is conceivable that a Bi-containing magnetic compound of a single-phase structure can be obtained by somewhat adjusting the composition so that the above formulae (1) and (2) are satisfied as in the compounds 110 and 111.

Table 1

| # | comp | call | A1 | | | A2 | | | A3 | | | B1 | | | B2 | | | rA | rB | tB/rA | me | cal | d/p |
|---|------|------|-----|-----|----|-----|-----|----|-----|-----|----|-----|-----|----|-----|-----|----|-----|-----|-------|-----|-----|-----|
| | | | i/o | i/d | co | i/o | i/d | co | i/o | i/d | co | i/o | i/d | co | i/o | i/d | co | | | | | | |
| 1 | (La2.67Lu0.3Pr0.03)Lu2Ga3O12 | Pr:LLGG-2.7 | La | 1.16 | 2.67 | Lu | 0.977 | 0.3 | Pr | 1.126 | 0.03 | Lu | 0.861 | 2 | - | | 0 | 1.14 | 0.86 | 0.75 | 12.9940 | | |
| 2 | (Y2.97Pr0.03)Sc2Ga3O12 | Pr:YSGG | Y | 1.019 | 2.97 | Pr | 1.126 | 0.03 | - | | 0 | Sc | 0.745 | 2 | - | | 0 | 1.02 | 0.75 | 0.73 | 12.4837 | | |
| 3 | (Gd2.97Pr0.03)Ga2Ga3O12 | Pr:GGGG | Gd | 1.053 | 2.97 | Pr | 1.126 | 0.03 | - | | 0 | Ga | 0.62 | 2 | - | | 0 | 1.05 | 0.62 | 0.59 | 12.3802 | | |
| 4 | (La2.77Sc0.2Pr0.03)Sc2Ga3O12 | Pr:LSGG | La | 1.16 | 2.77 | Sc | 0.87 | 0.2 | Pr | 1.126 | 0.03 | Sc | 0.745 | 2 | - | | 0 | 1.14 | 0.75 | 0.65 | 12.8274 | | |
| 5 | (Gd2.97Pr0.03)Sc2Ga3O12 | Pr:GSGG | Gd | 1.053 | 2.97 | Pr | 1.126 | 0.03 | - | | 0 | Sc | 0.745 | 2 | - | | 0 | 1.05 | 0.75 | 0.71 | 12.5781 | | |
| 6 | (Y2.97Pr0.03)Ga2Ga3O12 | Pr:YGGG | Y | 1.019 | 2.97 | Pr | 1.126 | 0.03 | - | | 0 | Ga | 0.62 | 2 | - | | 0 | 1.02 | 0.62 | 0.61 | 12.3739 | | |
| 7 | (La1.47Y1.5Pr0.03)Sc2Ga3O12 | Pr(LY)SGG | La | 1.16 | 1.47 | Y | 1.019 | 1.5 | Pr | 1.126 | 0.03 | Sc | 0.745 | 2 | - | | 0 | 1.09 | 0.75 | 0.68 | 12.6520 | | |
| 8 | Y3Ga2Ga3O12 | | Y | 1.019 | 3 | — | | 0 | - | | 0 | Ga | 0.62 | 2 | — | | 0 | 1.02 | 0.62 | 0.61 | 12.274 | | |
| 9 | Nd3Ga2Ga3O12 | | Nd | 1.109 | 3 | — | | 0 | - | | 0 | Ga | 0.62 | 2 | — | | 0 | 1.11 | 0.62 | 0.56 | 12.504 | | |
| 10 | Sm3Ga2Ga3O12 | | Sm | 1.079 | 3 | — | | 0 | - | | 0 | Ga | 0.62 | 2 | — | | 0 | 1.08 | 0.62 | 0.57 | 12.433 | | |
| 11 | Eu3Ga2Ga3O12 | | Eu | 1.066 | 3 | — | | 0 | - | | 0 | Ga | 0.62 | 2 | — | | 0 | 1.07 | 0.62 | 0.58 | 12.402 | | |
| 12 | Gd3Ga2Ga3O12 | | Gd | 1.053 | 3 | — | | 0 | - | | 0 | Ga | 0.62 | 2 | — | | 0 | 1.05 | 0.62 | 0.59 | 12.376 | | |
| 13 | Tb3Ga2Ga3O12 | | Tb | 1.04 | 3 | — | | 0 | - | | 0 | Ga | 0.62 | 2 | — | | 0 | 1.04 | 0.62 | 0.60 | 12.340 | | |
| 14 | Dy3Ga2Ga3O12 | | Dy | 1.027 | 3 | — | | 0 | - | | 0 | Ga | 0.62 | 2 | — | | 0 | 1.03 | 0.62 | 0.60 | 12.307 | | |
| 15 | Ho3Ga2Ga3O12 | | Ho | 1.015 | 3 | — | | 0 | - | | 0 | Ga | 0.62 | 2 | — | | 0 | 1.01 | 0.62 | 0.61 | 12.281 | | |
| 16 | Er3Ga2Ga3O12 | | Er | 1.004 | 3 | — | | 0 | - | | 0 | Ga | 0.62 | 2 | — | | 0 | 1.00 | 0.62 | 0.62 | 12.254 | | |
| 17 | Tm3Ga2Ga3O12 | | Tm | 0.994 | 3 | — | | 0 | - | | 0 | Ga | 0.62 | 2 | — | | 0 | 0.99 | 0.62 | 0.62 | 12.229 | | |
| 18 | Yb3Ga2Ga3O12 | | Yb | 0.985 | 3 | — | | 0 | - | | 0 | Ga | 0.62 | 2 | — | | 0 | 0.99 | 0.62 | 0.63 | 12.204 | | |
| 19 | Lu3Ga2Ga3O12 | | Lu | 0.977 | 3 | — | | 0 | - | | 0 | Ga | 0.62 | 2 | — | | 0 | 0.98 | 0.62 | 0.63 | 12.203 | | |
| 20 | Y3Sc2Ga3O12 | | Y | 1.019 | 3 | — | | 0 | - | | 0 | Sc | 0.745 | 2 | — | | 0 | 1.02 | 0.75 | 0.73 | 12.458 | | |
| 21 | Sm3Sc2Ga3O12 | | Sm | 1.079 | 3 | — | | 0 | - | | 0 | Sc | 0.745 | 2 | — | | 0 | 1.08 | 0.75 | 0.69 | 12.640 | | |
| 22 | Gd3Sc2Ga3O12 | | Gd | 1.053 | 3 | — | | 0 | - | | 0 | Sc | 0.745 | 2 | — | | 0 | 1.05 | 0.75 | 0.71 | 12.569 | | |
| 23 | Tb3Sc2Ga3O12 | | Tb | 1.04 | 3 | — | | 0 | - | | 0 | Sc | 0.745 | 2 | — | | 0 | 1.04 | 0.75 | 0.72 | 12.525 | | |
| 24 | Yb3Sc2Ga3O12 | | Yb | 0.985 | 3 | — | | 0 | - | | 0 | Sc | 0.745 | 2 | — | | 0 | 0.99 | 0.75 | 0.76 | 12.375 | | |
| 25 | Pr3Ga2Ga3O12 | | Pr | 1.126 | 3 | — | | 0 | - | | 0 | Ga | 0.62 | 2 | — | | 0 | 1.13 | 0.62 | 0.55 | 12.552 | | |
| 26 | Pr3Lu2Ga3O12 | | Pr | 1.126 | 3 | — | | 0 | - | | 0 | Lu | 0.861 | 2 | — | | 0 | 1.13 | 0.86 | 0.76 | 12.942 | | |
| 27 | Pr3Yb2Ga3O12 | | Pr | 1.126 | 3 | — | | 0 | - | | 0 | Yb | 0.868 | 2 | — | | 0 | 1.13 | 0.87 | 0.77 | 12.928 | | |
| 28 | (Pr2.5Yb0.5)Ga2Ga3O12 | | Pr | 1.126 | 2.5 | Yb | 0.985 | 0.5 | - | | 0 | Ga | 0.62 | 2 | — | | 0 | 1.10 | 0.62 | 0.56 | 12.505 | | |
| 29 | (Pr2.92Yb0.08)(Yb1.95Ga0.05)Ga3O12 | | Pr | 1.126 | 2.92 | Yb | 0.985 | 0.08 | - | | 0 | Yb | 0.868 | 1.95 | Ga | 0.62 | 0.05 | 1.12 | 0.86 | 0.77 | 12.940 | | |
| 30 | (Pr2.5Yb0.5)Yb2Ga3O12 | | Pr | 1.126 | 2.5 | Yb | 0.985 | 0.5 | - | | 0 | Yb | 0.868 | 2 | — | | 0 | 1.10 | 0.87 | 0.79 | 12.890 | | |
| 31 | (Pr2.2Tm0.8)(Ga2Ga3O12) | | Pr | 1.126 | 2.2 | Tm | 0.994 | 0.8 | - | | 0 | Ga | 0.62 | 2 | — | | 0 | 1.09 | 0.62 | 0.57 | 12.480 | | |

| # | comp | call | A1 | | | A2 | | | A3 | | | B1 | | | B2 | | | rA | rB | rB/rA | me | cal | d/p |
|---|------|------|-----|-----|----|-----|-----|----|-----|-----|----|-----|-----|----|-----|-----|----|-----|-----|-------|-----|-----|-----|
| | | | i/o | i/d | co | i/o | i/d | co | i/o | i/d | co | i/o | i/d | co | i/o | i/d | co | | | | | | |
| 32 | Pr3Tm2Ga3O12 | | Pr | 1.126 | 3 | — | | 0 | - | | 0 | Tm | 0.88 | 2 | — | | 0 | 1.13 | 0.88 | 0.78 | 12.904 | | |
| 33 | (Pr2.2Tm0.8)Tm2Ga3O12 | | Pr | 1.126 | 2.2 | Tm | 0.994 | 0.8 | - | | 0 | Tm | 0.88 | 2 | — | | 0 | 1.09 | 0.88 | 0.81 | 12.882 | | |
| 34 | Pr3Er2Ga3O12 | | Pr | 1.126 | 3 | — | | 0 | - | | 0 | Er | 0.89 | 2 | — | | 0 | 1.13 | 0.89 | 0.79 | 12.882 | | |
| 35 | (Pr1.85Er1.15)Ga2Ga3O12 | | Pr | 1.126 | 1.85 | Er | 1.004 | 1.15 | - | | 0 | Ga | 0.62 | 2 | — | | 0 | 1.08 | 0.62 | 0.57 | 12.433 | | |
| 36 | (Pr1.85Er1.15)(Er1.75Ga0.25)Ga3O12 | | Pr | 1.126 | 1.85 | Er | 1.004 | 1.15 | - | | 0 | Er | 0.89 | 1.75 | Ga | 0.62 | 0.25 | 1.08 | 0.86 | 0.79 | 12.823 | | |
| 37 | (Pr1.85Er1.15)Er2Ga3O12 | | Pr | 1.126 | 1.85 | Er | 1.004 | 1.15 | - | | 0 | Er | 0.89 | 2 | — | | 0 | 1.08 | 0.89 | 0.82 | 12.860 | | |
| 38 | (La2.9Sc0.1)Sc2Ga3O12 | | La | 1.16 | 2.9 | Sc | 0.87 | 0.1 | - | | 0 | Sc | 0.745 | 2 | — | | 0 | 1.15 | 0.75 | 0.65 | 12.847 | | |
| 39 | (La2.6Sc0.4)Sc2Ga3O12 | | La | 1.16 | 2.6 | Sc | 0.87 | 0.4 | - | | 0 | Sc | 0.745 | 2 | — | | 0 | 1.12 | 0.75 | 0.66 | 12.839 | | |
| 40 | (La2.7Lu0.3)Lu2Ga3O12 | | La | 1.16 | 2.7 | Lu | 0.977 | 0.3 | - | | 0 | Lu | 0.861 | 2 | — | | 0 | 1.14 | 0.86 | 0.75 | 12.997 | | |
| 41 | (La2.6Yb0.4)Sc2Ga3O12 | | La | 1.16 | 2.6 | Yb | 0.985 | 0.4 | - | | 0 | Yb | 0.868 | 2 | — | | 0 | 1.14 | 0.87 | 0.76 | 13.007 | | |
| 42 | (La2.5Tm0.5)Tm2Ga3O12 | | La | 1.16 | 2.5 | Tm | 0.994 | 0.5 | - | | 0 | Tm | 0.88 | 2 | — | | 0 | 1.13 | 0.88 | 0.78 | 13.010 | | |
| 43 | Nd3Ga2Ga3O12 | | Nd | 1.109 | 3 | — | | 0 | - | | 0 | Ga | 0.62 | 2 | — | | 0 | 1.11 | 0.62 | 0.56 | 12.504 | | |
| 44 | Yb3Ga2Ga3O12 | | Yb | 0.985 | 3 | — | | 0 | - | | 0 | Ga | 0.62 | 2 | — | | 0 | 0.99 | 0.62 | 0.63 | 12.203 | | |
| 45 | Nd3Lu2Ga3O12 | | Nd | 1.109 | 3 | — | | 0 | - | | 0 | Lu | 0.861 | 2 | — | | 0 | 1.11 | 0.86 | 0.78 | 12.881 | | |
| 46 | Nd3Yb2Ga3O12 | | Nd | 1.109 | 3 | — | | 0 | - | | 0 | Yb | 0.868 | 2 | — | | 0 | 1.11 | 0.87 | 0.78 | 12.890 | | |
| 47 | Nd3Tm2Ga3O12 | | Nd | 1.109 | 3 | — | | 0 | - | | 0 | Tm | 0.88 | 2 | — | | 0 | 1.11 | 0.88 | 0.79 | 12.882 | | |
| 48 | Nd2Er2Ga3O12 | | Nd | 1.109 | 3 | — | | 0 | - | | 0 | Er | 0.89 | 2 | — | | 0 | 1.11 | 0.89 | 0.80 | 12.831 | | |
| 49 | Nd3Ho2Ga3O12 | | Nd | 1.109 | 3 | — | | 0 | - | | 0 | Ho | 0.901 | 2 | — | | 0 | 1.11 | 0.90 | 0.81 | 12.652 | | |
| 50 | Nd3Dy2Ga3O12 | | Nd | 1.109 | 3 | — | | 0 | - | | 0 | Dy | 0.912 | 2 | — | | 0 | 1.11 | 0.91 | 0.82 | 12.510 | | |
| 51 | (Nd2.8Lu0.2)Lu2Ga3O12 | | Nd | 1.109 | 2.8 | Lu | 0.977 | 0.2 | - | | 0 | Lu | 0.861 | 2 | — | | 0 | 1.10 | 0.86 | 0.78 | 12.866 | | |
| 52 | (Nd2.5Yb0.5)Yb2Ga3O12 | | Nd | 1.109 | 2.5 | Yb | 0.985 | 0.5 | - | | 0 | Yb | 0.868 | 2 | — | | 0 | 1.09 | 0.87 | 0.80 | 12.855 | | |
| 53 | (Nd1.9Er1.1)Er2Ga3O12 | | Nd | 1.109 | 1.9 | Er | 1.004 | 1.1 | - | | 0 | Er | 0.89 | 2 | — | | 0 | 1.07 | 0.89 | 0.83 | 12.813 | | |
| 54 | (Nd2.7Yb0.3)Ga2Ga3O12 | | Nd | 1.109 | 2.7 | YB | 0.985 | 0.3 | - | | 0 | Ga | 0.62 | 2 | — | | 0 | 1.10 | 0.62 | 0.57 | 12.486 | | |
| 55 | (Nd2.7Yb0.3)(Yb1.5Ga0.5)Ga3O12 | | Nd | 1.109 | 2.7 | Yb | 0.985 | 0.3 | - | | 0 | Yb | 0.868 | 1.5 | Ga | 0.62 | 0.5 | 1.10 | 0.81 | 0.73 | 12.767 | | |
| 56 | (Nd2.7Yb0.3)Yb2Ga3O12 | | Nd | 1.109 | 2.7 | Yb | 0.985 | 0.3 | - | | 0 | Yb | 0.868 | 2 | — | | 0 | 1.10 | 0.87 | 0.79 | 12.864 | | |
| 57 | (Nd2.4Tm0.6)Ga2O12 | | Nd | 1.109 | 2.4 | Tm | 0.994 | 0.6 | - | | 0 | Ga | 0.62 | 2 | — | | 0 | 1.09 | 0.62 | 0.57 | 12.454 | | |
| 58 | (Nd2.4Tm0.6)(Tm1.6Ga0.4)O12 | | Nd | 1.109 | 2.4 | Tm | 0.994 | 0.6 | - | | 0 | Tm | 0.88 | 1.6 | Ga | 0.62 | 0.4 | 1.09 | 0.83 | 0.76 | 12.784 | | |
| 59 | (Nd2.4Tm0.6)Tm2Ga3O12 | | Nd | 1.109 | 2.4 | Tm | 0.994 | 0.6 | - | | 0 | Tm | 0.88 | 2 | — | | 0 | 1.09 | 0.88 | 0.81 | 12.854 | | |
| 60 | Nd1.9Er1.1)Ga2Ga3O12 | | Nd | 1.109 | 1.9 | Er | 1.004 | 1.1 | - | | 0 | Ga | 0.62 | 2 | — | | 0 | 1.07 | 0.62 | 0.58 | 12.414 | | |
| 61 | (Nd1.9Er1.1)(Er1.5Ga0.5)Ga3O12 | | Nd | 1.109 | 1.9 | Er | 1.004 | 1.1 | - | | 0 | Er | 0.89 | 1.5 | Ga | 0.62 | 0.5 | 1.07 | 0.82 | 0.76 | 12.751 | | |
| 62 | (Nd1.35Ho1.65)Ga2Ga3O12 | | Nd | 1.109 | 1.35 | Ho | 1.015 | 1.65 | - | | 0 | Ga | 0.62 | 2 | — | | 0 | 1.06 | 0.62 | 0.59 | 12.400 | | |
| 63 | (Nd1.35Ho1.35)(Ho0.5Ga1.5)Ga3O12 | | Nd | 1.109 | 1.35 | Ho | 1.015 | 1.65 | - | | 0 | Ho | 0.901 | 0.5 | Ga | 0.62 | 1.5 | 1.06 | 0.69 | 0.65 | 12.523 | | |
| 64 | (Nd1.1Dy1.9)Ga2Ga3O12 | | Nd | 1.109 | 1.1 | Dy | 1.027 | 1.9 | - | | 0 | Ga | 0.62 | 2 | — | | 0 | 1.06 | 0.62 | 0.59 | 12.385 | | |

| # | comp | call | A1 | | | A2 | | | A3 | | | B1 | | | B2 | | | rA | rB | rB/rA | me | cal | d/p |
|---|---|---|---|---|---|---|---|---|---|---|---|---|---|---|---|---|---|---|---|---|---|---|---|
| | | | i/o | i/d | co | i/o | i/d | co | i/o | i/d | co | i/o | i/d | co | i/o | i/d | co | | | | | | |
| 65 | (Nd1.1Dy1.9)(Dy0.5Ga1.5)Ga3O12 | | Nd | 1.109 | 1.1 | Dy | 1.027 | 1.9 | - | | 0 | Dy | 0.912 | 0.5 | Ga | 0.62 | 1.5 | 1.06 | 0.69 | 0.66 | 12.501 | | |
| 66 | Nd3(Nd0.1Ga1.9)Ga3O12 | | Nd | 1.109 | 3 | — | | 0 | - | | 0 | Nd | 0.983 | 0.1 | Ga | 0.62 | 1.9 | 1.11 | 0.64 | 0.58 | 12.509 | | |
| 67 | Sm3(Sm0.018Ga1.982)Ga3O12 | | Sm | 1.079 | 3 | — | | 0 | - | | 0 | Sm | 0.958 | 0.018 | Ga | 0.62 | 1.982 | 1.08 | 0.62 | 0.58 | 12.438 | | |
| 68 | Eu3(Eu0.022Ga1.982)Ga3O12 | | Eu | 1.066 | 3 | — | | 0 | - | | 0 | Eu | 0.947 | 0.022 | Ga | 0.62 | 1.978 | 1.07 | 0.62 | 0.58 | 12.405 | | |
| 69 | Gd3(Gd0.027Ga1.973)Ga3O12 | | Gd | 1.053 | 3 | — | | 0 | - | | 0 | Gd | 0.938 | 0.027 | Ga | 0.62 | 1.973 | 1.05 | 0.62 | 0.59 | 12.383 | | |
| 70 | Dy3(Dy0.056Ga1.944)Ga3O12 | | Dy | 1.027 | 3 | — | | 0 | - | | 0 | Dy | 0.912 | 0.056 | Ga | 0.62 | 1.944 | 1.03 | 0.63 | 0.61 | 12.320 | | |
| 71 | Ho3(Ho0063Ga1.937)Ga3O12 | | Ho | 1.015 | 3 | — | | 0 | - | | 0 | Ho | 0.901 | 0.063 | Ga | 0.62 | 1.937 | 1.01 | 0.63 | 0.62 | 12.296 | | |
| 72 | Y3(Y0.091Ga1.909)Ga3O12 | | Y | 1.019 | 3 | — | | 0 | - | | 0 | Y | 0.9 | 0.091 | Ga | 0.62 | 1.909 | 1.02 | 0.63 | 0.62 | 12.295 | | |
| 73 | Y3(Cr0.75Ga1.25)Ga3O12 | | Y | 1.019 | 3 | — | | 0 | - | | 0 | Cr | 0.615 | 0.75 | Ga | 0.62 | 1.25 | 1.02 | 0.62 | 0.61 | 12.272 | | |
| 74 | Y3In2Ga3O12 | | Y | 1.019 | 3 | — | | 0 | - | | 0 | In | 0.8 | 2 | — | | 0 | 1.02 | 0.80 | 0.79 | 12.548 | | |
| 75 | (La2.8In0.2In2Ga3O12 | | La | 1.16 | 2.8 | In | 0.92 | 0.2 | - | | 0 | In | 0.8 | 2 | — | | 0 | 1.14 | 0.80 | 0.70 | 12.934 | | |
| 76 | (La2.8In0.2)(In1.9Ga0.1)Ga3O12 | | La | 1.16 | 2.8 | In | 0.92 | 0.2 | - | | 0 | In | 0.8 | 1.9 | Ga | 0.62 | 0.1 | 1.14 | 0.79 | 0.69 | 12.928 | | |
| 77 | (Y2.97Pr0.03)Sc2Al3O12 | Pr:YSAG | Y | 1.019 | 2.97 | Pr | 1.126 | 0.03 | - | | 0 | Sc | 0.745 | 2 | - | | 0 | 1.02 | 0.75 | 0.73 | 12.3239 | | |
| 78 | (Y2.97Pr0.03)Al2Al3O12 | Pr:YAAG | Y | 1.019 | 2.97 | Pr | 1.126 | 0.03 | - | | 0 | Al | 0.535 | 2 | - | | 0 | 1.02 | 0.54 | 0.52 | 12.0087 | | |
| 79 | (Y2.97Pr0.03)Ga2Al3O12 | Pr:YGAG | Y | 1.019 | 2.97 | Pr | 1.126 | 0.03 | - | | 0 | Ga | 0.62 | 2 | - | | 0 | 1.02 | 0.62 | 0.61 | 12.1109 | | |
| 80 | (Y2.97Pr0.03)(ScAl)Al3O12 | | Y | 1.019 | 2.97 | Pr | 1.126 | 0.03 | - | | 0 | Sc | 0.745 | 1 | Al | 0.535 | 1 | 1.02 | 0.64 | 0.63 | 12.1570 | | |
| 81 | Y3Al2Al3O12 | | Y | 1.019 | 3 | — | | 0 | | | 0 | Al | 0.535 | 2 | — | | 0 | 1.02 | 0.54 | 0.53 | 12.000 | | |
| 82 | Gd3Al2Al3O12 | | Gd | 1.053 | 3 | — | | 0 | | | 0 | Al | 0.535 | 2 | — | | 0 | 1.05 | 0.54 | 0.51 | 12.113 | | |
| 83 | Tb3Al2Al3O12 | | Tb | 1.04 | 3 | — | | 0 | | | 0 | Al | 0.535 | 2 | — | | 0 | 1.04 | 0.54 | 0.51 | 12.074 | | |
| 84 | Dy3Al2Al3O12 | | Dy | 1.027 | 3 | — | | 0 | | | 0 | Al | 0.535 | 2 | — | | 0 | 1.03 | 0.54 | 0.52 | 12.042 | | |
| 85 | Ho3Al2Al3O12 | | Ho | 1.015 | 3 | — | | 0 | | | 0 | Al | 0.535 | 2 | — | | 0 | 1.01 | 0.54 | 0.53 | 12.001 | | |
| 86 | Er3Al2Al3O12 | | Er | 1.004 | 3 | — | | 0 | | | 0 | Al | 0.535 | 2 | — | | 0 | 1.00 | 0.54 | 0.53 | 11.981 | | |
| 87 | Tm3Al2Al3O12 | | Tm | 0.994 | 3 | — | | 0 | | | | Al | 0.535 | 2 | — | | 0 | 0.99 | 0.54 | 0.54 | 11.957 | | |
| 88 | Yb3Al2Al3O12 | | Yb | 0.985 | 3 | — | | 0 | | | 0 | Al | 0.535 | 2 | — | | 0 | 0.99 | 0.54 | 0.54 | 11.929 | | |
| 89 | Lu3Al2Al3O12 | | Lu | 0.977 | 3 | — | | 0 | | | 0 | Al | 0.535 | 2 | — | | 0 | 0.98 | 0.54 | 0.55 | 11.912 | | |
| 90 | Lu3Sc2Al3O12 | | Y | 1.019 | 3 | — | | 0 | | | 0 | Sc | 0.745 | 2 | — | | 0 | 1.02 | 0.75 | 0.73 | 12.324 | | |
| 91 | Sm3Sc2Al3O12 | | Sm | 1.079 | 3 | — | | 0 | | | 0 | Sc | 0.745 | 2 | — | | 0 | 1.08 | 0.75 | 0.69 | 12.495 | | |
| 92 | Eu3Sc2Al3O12 | | Eu | 1.066 | 3 | — | | 0 | | | 0 | Sc | 0.745 | 2 | — | | 0 | 1.07 | 0.75 | 0.70 | 12.460 | | |
| 93 | Gd3Sc2Al3O12 | | Gd | 1.053 | 3 | — | | 0 | | | 0 | Sc | 0.745 | 2 | — | | 0 | 1.05 | 0.75 | 0.71 | 12.430 | | |
| 94 | Dy3Sc2Al3O12 | | Dy | 1.027 | 3 | — | | 0 | | | 0 | Sc | 0.745 | 2 | — | | 0 | 1.03 | 0.75 | 0.73 | 12.360 | | |
| 95 | Ho3Sc2Al3O12 | | Ho | 1.015 | 3 | — | | 0 | | | 0 | Sc | 0.745 | 2 | — | | 0 | 1.01 | 0.75 | 0.73 | 12.324 | | |
| 96 | Er3Sc2Al3O12 | | Er | 1.004 | 3 | — | | 0 | | | 0 | Sc | 0.745 | 2 | — | | 0 | 1.00 | 0.75 | 0.74 | 12.300 | | |
| 97 | Tm3Sc2Al3O12 | | Tm | 0.994 | 3 | — | | 0 | | | 0 | Sc | 0.745 | 2 | — | | 0 | 0.99 | 0.75 | 0.75 | 12.220 | | |

65 (Nd1.1Dy1.9)(Dy0.5Ga1.5)Ga3O12 Nd 1.109 1.1 Dy 1.027 1.9 - 0 Dy 0.912 0.5 Ga 0.62 1.5 1.06 0.69 0.66 12.501

66 Nd3(Nd0.1Ga1.9)Ga3O12 Nd 1.109 3 - 0 - 0 Nd 0.983 0.1 Ga 0.62 1.9 1.11 0.64 0.58 12.509

67 Sm3(Sm0.018Ga1.982)Ga3O12 Sm 1.079 3 - 0 - 0 Sm 0.958 0.018 Ga 0.62 1.982 1.08 0.62 0.58 12.438

68 Eu3(Eu0.022Ga1.982)Ga3O12 Eu 1.066 3 - 0 - 0 Eu 0.947 0.022 Ga 0.62 1.978 1.07 0.62 0.58 12.405

69 Gd3(Gd0.027Ga1.973)Ga3O12 Gd 1.053 3 - 0 - Gd 0.938 0.027 Ga 0.62 1.973 1.05 0.62 0.59 12.383

70 Dy3(Dy0.056Ga1.944)Ga3O12 Dy 1.027 3 - 0 - 0 Dy 0.912 0.056 Ga 0.62 1.944 1.03 0.63 0.61 12.320

71 Ho3(Ho0063Ga1.937)Ga3O12 Ho 1.015 3 - 0 - 0 Ho 0.091 0.063 Ga 0.62 1.937 1.01 0.63 0.62 12.296

72 Y3(Y0.091Ga1.909)Ga3O12 Y 1.019 3 - 0 - 0 Y 0.9 0.091 Ga 0.62 1.909 1.02 0.63 0.62 12.295

73 Y3(Cr0.75Ga1.25)Ga3O12 Y 1.019 3 - 0 - 0 Cr 0.615 0.75 Ga 0.62 1.25 1.02 0.62 0.61 12.272

74 Y3In2Ga3O12 Y 1.019 3 - 0 - 0 In 0.8 2 - 0 1.02 0.80 0.79 12.548

75 (La2.8In0.2In2Ga3O12 La 1.16 2.8 In 0.92 0.2 - 0 In 0.8 2 - 0 1. 14 0.80 0.70 12.934

76 (La2.8In0.2)(In1.9Ga0.1)Ga3O12 La 1.16 2.8 In 0.92 0.2 - 0 In 0.8 1.9 Ga 0.62 0.1 1.14 0.79 0.69 12.928

77 (Y2.97Pr0.03)Sc2Al3O12 Pr:YSAG Y 1.019 2.97 Pr 1.126 0.03 - 0 Sc 0.745 2 - 0 1.02 0.54 0.73 12.3239

78 (Y2.97Pr0.03)Al2Al3O12 Pr:YAAG Y 1.019 2.97 Pr 1.126 0.03 - 0 Al 0.535 2 - 0 1.02 0.54 0.52 12.0087

79 (Y0.97Pr0.03)Ga2Al3O12 Pr:YGAG Y 1.019 2.97 Pr 1.126 0.03 - 0 Ga 0.62 2 - 0 1.02 0.62 0.61 12.1109

80 (Y2.97Pt0.03)(ScAl)Al3O12 Y 1.019 2.97 Pr 1.126 0.03 - 0 Sc 0.745 1 Al 0.535 1 1.02 0.64 0.63 12.1570

81 Y3Al2Al3O12 Y 1.019 3 - 0 0 Al 0.535 2 - 0 1.02 0.54 0.53 12.000

82 Gd3Al2Al3O12 Gd 1.053 3 - 0 0 Al 0.535 2 - 0 1.05 0.54 0.51 12.113

83 Tb3Al2Al3O12 Tb 1.04 3 - 0 0 Al 0.535 2 - 0 1.04 0.54 0.51 12.074

84 Dy3Al2Al3O12 Dy 1.027 3 - 0 0 Al 0.5358 2 - 0 1.03 0.54 0.52 12.042

85 Ho3Al2Al3O12 Ho 1.015 3 - 0 0 Al 0.535 2 - 0 1.01 0.54 0.53 12.001

86 Er3Al2Al3O12 Er 1.004 3 - 0 0 0 Al 0.535 2 - 0 1.00 0.54 0.53 11.981

87 Tm3Al2Al3O12 Tm 0.994 3 - 0 Al 0.535 2 - 1 0 0.99 0.54 0.54 11.957

88 Yb3Al2Al3O12 Yb 0.985 3 - 0 0 Al 0.535 2 - 0 0.99 0.54 0.54 11.929

89 Lu3Al2Al3O12 Lu 0.977 3 - 0 0 Al 0.535 2 - 0 0.98 0.54 0.55 11.912

90 Lu3Sc2Al3O12 Y 1.019 3 - 0 0 0 Sc 0.745 2 - 0 1.02 0.75 0.73 12.324

91 Sm3Sc2Al3O12 Sm 1.079 3 - 0 0 Sc 0.745 2 - 0 10.8 0.75 0.69 12.495

92 Eu3Sc2Al3O12 Eu 1.066 3 - 0 0 Sc 0.745 2 - 0 1.07 0.75 0.70 12.460

93 Gd3Sc2Al3O12 Gd 0.153 3 - 0 0 Sc 0.745 2 - 0 1.05 12.430

94 Dy3Sc2Al3O12 Dy 1.027 3 - 0 0 Sc 0.745 2 - 1 0 1.03 0.75 0.73 12.360

95 Ho3Sc2Al3O12 Ho 1.015 3 - 0 0 Sc 0.745 2 - 1 0 1.01 0.75 0.73 12.324

96 Er3Sc2Al3O12 Er 1.004 3 - 0 0 Sc 0.745 2 - 0 1.00 0.75 0.74 12.300
97 Tm3Sc2Al3O12 Tm 0.994 3 - 0 0 Sc 0.745 2 - 0 0.99 0.75 0.75 12.220

| # | comp | call | A1 i/o | A1 i/d | A1 co | A2 i/o | A2 i/d | A2 co | A3 i/o | A3 i/d | A3 co | B1 i/o | B1 i/d | B1 co | B2 i/o | B2 i/d | B2 co | rA | rB | rB/rA | me | cal | d/p |
|---|------|------|--------|--------|-------|--------|--------|-------|--------|--------|-------|--------|--------|-------|--------|--------|-------|----|----|-------|----|-----|-----|
| 98 | Yb3Sc2Al3O12 | | Yb | 0.985 | 3 | — | | 0 | - | | 0 | Sc | 0.745 | 2 | — | | 0 | 0.99 | 0.75 | 0.76 | 12.162 | | |
| 99 | Y3Sc2Al3O12 | | Y | 1.019 | 3 | — | | 0 | - | | 0 | Sc | 0.745 | 2 | — | | 0 | 1.02 | 0.75 | 0.73 | 12.324 | | |
| 100 | (Y2.8Nd0.2)Sc3Al3O12 | | Y | 1.019 | 2.8 | Nd | 1.109 | 0.2 | - | | 0 | Sc | 0.745 | 2 | — | | 0 | 1.02 | 0.75 | 0.73 | 12.346 | | |
| 101 | (Y2.6Nd0.4)Sc3Al3O12 | | Y | 1.019 | 2.6 | Nd | 1.109 | 0.4 | - | | 0 | Sc | 0.745 | 2 | — | | 0 | 1.03 | 0.75 | 0.72 | 12.360 | | |
| 102 | (Y2.2Nd0.8)Sc3Al3O12 | | Y | 1.019 | 2.2 | Nd | 1.109 | 0.8 | - | | 0 | Sc | 0.745 | 2 | — | | 0 | 1.04 | 0.75 | 0.71 | 12.389 | | |
| 103 | (Y1.8Nd1.2)Sc3Al3O12 | | Y | 1.019 | 1.8 | Nd | 1.109 | 1.2 | - | | 0 | Sc | 0.745 | 2 | — | | 0 | 1.06 | 0.75 | 0.71 | 12.418 | | |
| 104 | Gd3Sc3Al3O12 | | Gd | 1.053 | 3 | — | | 0 | - | | 0 | Sc | 0.745 | 2 | — | | 0 | 1.05 | 0.75 | 0.71 | 12.430 | | |
| 105 | (Gd2.8Nd0.2)Sc3Al3O12 | | Gd | 1.053 | 2.8 | Nd | 1.109 | 0.2 | - | | 0 | Sc | 0.745 | 2 | — | | 0 | 1.06 | 0.75 | 0.71 | 12.441 | | |
| 106 | (Gd2.6Nd0.4)Sc3Al3O12 | | Gd | 1.053 | 2.6 | Nd | 1.109 | 0.4 | - | | 0 | Sc | 0.745 | 2 | — | | 0 | 1.06 | 0.75 | 0.70 | 12.449 | | |
| 107 | (Gd2.4Nd0.6)Sc3Al3O12 | | Gd | 1.053 | 2.4 | Nd | 1.109 | 0.6 | - | | 0 | Sc | 0.745 | 2 | — | | 0 | 1.06 | 0.75 | 0.70 | 12.462 | | |
| 108 | (Gd2.2Nd0.8)Sc3Al3O12 | | Gd | 1.053 | 2.2 | Nd | 1.109 | 0.8 | - | | 0 | Sc | 0.745 | 2 | — | | 0 | 1.07 | 0.75 | 0.70 | 12.469 | | |
| 109 | Y3Fe2Fe3O12 | | Y | 1.019 | 3 | — | | 0 | - | | 0 | Fe | 0.55 | 2 | - | | 0 | 1.02 | 0.55 | 0.54 | 12.377 | | |
| 110 | (Y2.75Bi0.25)Fe2Fe3O12 | | Y | 1.019 | 2.75 | Bi | 1.17 | 0.25 | - | | 0 | Fe | 0.55 | 2 | - | | 0 | 1.03 | 0.55 | 0.53 | 12.395 | | |
| 111 | (YBi2)(ScFe)Fe3O12 | | Y | 1.019 | 1 | Bi | 1.17 | 2 | - | | 0 | Sc | 0.745 | 1 | Fe | 0.55 | 1 | 1.12 | 0.65 | 0.58 | | 12.593 | |
| 112 | (Lu2.97Pr0.03)Lu2Ga3O12 | | Lu | 0.977 | 2.97 | Pr | 1.126 | 0.03 | - | | 0 | Lu | 0.861 | 2 | - | | 0 | 0.98 | 0.86 | 0.88 | - | 12.2171 | d/p |
| 113 | (La2.97Pr0.03)Ga2Ga3O12 | | La | 1.16 | 2.97 | Pr | 1.126 | 0.03 | - | | 0 | Ga | 0.62 | 2 | - | | 0 | 1.16 | 0.62 | 0.53 | - | 12.6012 | d/p |
| 114 | La3Lu2Ga3O12 | LLGG-3.0 | La | 1.16 | 3 | - | | 0 | - | | 0 | Lu | 0.861 | 2 | - | | 0 | 1.16 | 0.86 | 0.74 | >13.034 | - | d/p |
| 115 | (Sc2.97Pr0.03)Ga2Ga3O12 | | Sc | 0.87 | 2.97 | Pr | 1.126 | 0.03 | - | | 0 | Ga | 0.62 | 2 | - | | 0 | 0.87 | 0.62 | 0.71 | - | 11.9938 | d/p |
| 116 | La3Ga2Ga3O12 | | La | 1.16 | 3 | - | | 0 | - | | 0 | Ga | 0.62 | 2 | - | | 0 | 1.16 | 0.62 | 0.53 | - | 12.655 | d/p |
| 117 | (Sc2.97Pr0.03)Sc2Al3O12 | | Sc | 0.87 | 2.97 | Pr | 1.126 | 0.03 | - | | 0 | Sc | 0.745 | 2 | - | | 0 | 0.87 | 0.75 | 0.85 | - | 12.0394 | d/p |
| 118 | (La2.97Pr0.03)Al2Al3O12 | | La | 1.16 | 2.97 | Pr | 1.126 | 0.03 | - | | 0 | Al | 0.535 | 2 | - | | 0 | 1.16 | 0.54 | 0.46 | - | 12.3373 | d/p |
| 119 | (La2.97Pr0.03)Lu2Al3O12 | | La | 1.16 | 2.97 | Pr | 1.126 | 0.03 | - | | 0 | Lu | 0.861 | 2 | - | | 0 | 1.16 | 0.86 | 0.74 | - | 12.8184 | d/p |
| 120 | (Sc2.97Pr0.03)Al2Al3O12 | | Sc | 0.87 | 2.97 | Pr | 1.126 | 0.03 | - | | 0 | Al | 0.535 | 2 | - | | 0 | 0.87 | 0.54 | 0.61 | - | 11.6766 | d/p |
| 121 | La3Al2Al3O12 | | La | 1.16 | 3 | — | | 0 | - | | 0 | Al | 0.535 | 2 | — | | 0 | 1.16 | 0.54 | 0.46 | - | 12.415 | d/p |
| 122 | Pr3Al2Al3O12 | | Pr | 1.126 | 3 | — | | 0 | - | | 0 | Al | 0.535 | 2 | — | | 0 | 1.13 | 0.54 | 0.48 | - | 12.295 | d/p |
| 123 | Nd3Al2Al3O12 | | Nd | 1.109 | 3 | — | | 0 | - | | 0 | Al | 0.535 | 2 | — | | 0 | 1.11 | 0.54 | 0.48 | - | 12.254 | d/p |
| 124 | Sm3Al2Al3O12 | | Sm | 1.079 | 3 | — | | 0 | - | | 0 | Al | 0.535 | 2 | — | | 0 | 1.08 | 0.54 | 0.50 | - | 12.178 | d/p |
| 125 | Eu3Al2Al3O12 | | Eu | 1.066 | 3 | — | | 0 | - | | 0 | Al | 0.535 | 2 | — | | 0 | 1.07 | 0.54 | 0.50 | - | 12.143 | d/p |
| 126 | Bi3Fe2Fe3O12 | | Bi | 1.17 | 3 | - | | 0 | - | | 0 | Fe | 0.55 | 2 | - | | 0 | 1.17 | 0.55 | 0.47 | | 12.554 | d/p |

i/o     ion
i/d     ionic diameter
co      coefficient
me      measurement

cal         calculation
d/p         different phase

Table 2

| # | comp | novel? | call | firing temperature (°C) tentative | firing temperature (°C) firing/firing |
|---|------|--------|------|-----------|---------------|
| 1 | (La2.67Lu0.3Pr0.03)Lu2Ga3O12 | | Pr:LLGG-2.7 | 1450 | 1550 |
| 2 | (Y2.97Pr0.03)Sc2Ga3O12 | | Pr:YSGG | 1450 | 1600 |
| 3 | (Gd2.97Pr0.03)Ga2Ga3O12 | | Pr:GGGG | 1450 | 1550 |
| 4 | (La2.77Sc0.2Pr0.03)Sc2Ga3O12 | | Pr:LSGG | 1450 | 1550 |
| 5 | (Gd2.97Pr0.03)Sc2Ga3O12 | | Pr:GSGG | 1450 | 1550 |
| 6 | (Y2.97Pr0.03)Ga2Ga3O12 | | Pr:YGGG | 1450 | 1550 |
| 7 | (La1.47Y1.5Pr0.03)Sc2Ga3O12 | N | Pr:(LY)SGG | 1450 | 1550 |
| 77 | (Y2.97Pr0.03)Sc2Al3O12 | | Pr:YSAG | 1450 | 1700 |
| 78 | (Y2.97Pr0.03)Al2Al3O12 | | Pr:YAAG | 1450 | 1700 |
| 79 | (Y2.97Pr0.03)Ga2Al3O12 | | Pr:YGAG | 1450 | 1550 |
| 80 | (Y2.97Pr0.03)(ScAl)Al3O12 | N | | 1450 | 1700 |

(continued)

| # | comp | novel? | call | firing temperature (°C) | |
|---|---|---|---|---|---|
| | | | | tentative | firing/firing |
| 112 | (Lu2.97Pr0.03)Lu2Ga3O12 | | | 1450 | 1550 |
| 113 | (La2.97Pr0.03)Ga2Ga3O12 | | | 1450 | 1500 |
| 114 | La3Lu2Ga3O12 | | LLGG-3.0 | 1450 | 1550 |
| 115 | (Sc2.97Pr0.03)Ga2Ga3O12 | | | 1450 | 1550 |
| 117 | (Sc2.97Pr0.03)Sc2Al3O12 | | | 1450 | 1700 |
| 118 | (La2.97Pr0.03)Al2Al3O12 | | | 1450 | 1700 |
| 119 | (La2.97Pr0.03)Lu2Al3O12 | | | 1450 | 1700 |
| 120 | (Sc2.97Pr0.03)Al2Al3O12 | | | 1450 | 1700 |

Table 3

| # | comp | call | fluorescence masurement | | | |
|---|---|---|---|---|---|---|
| | | | e/wl | f/wl | fluorescence intensity | |
| | | | | | near 450nm | near 290nm |
| 1 | (La2.67Lu0.3Pr0.03)Lu2Ga3O12 | PrLLGG-2.7 | 449 | 486 | 1 | 1 |
| 2 | (Y2.97Pr0.03)Sc2Ga3O12 | Pr:YSGG | 448 | 484 | 1.28 | 0.68 |
| 3 | (Gd2.97Pr0.03)Ga2Ga3O12 | Pr:GGGG | 449 | 485 | 1.91 | 1.15 |
| 4 | (La2.775c0.2Pr0.03)Sc2Ga3O12 | Pr.LSGG | 450 | 485 | 1.69 | 0.96 |
| 5 | (Gd2.97Pr0.03)Sc2Ga3O12 | Pr.GSGG | 449 | 485 | 1.17 | 1.02 |
| 6 | (Y2.97Pr0.03)Ga2Ga3O12 | Pr:YGGG | 448 | 485 | 1.81 | 1.4 |
| 77 | (Y2.97Pr0.03)Sc2Al3O12 | Pr:YSAG | 450 | 485 | 0.84 | 0.8 |
| 78 | (Y2.97Pr0.03)Al2Al3O12 | Pr:YAAG | 451 | 486 | 0.61 | 0.32 |
| 79 | (Y2.97Pr0.03)Ga2Al3O12 | Pr:YGAG | 450 | 486 | 1.82 | 0.29 |

The garnet-type compound of the present invention can be used as the light emitting compound used in the phosphor, solid laser medium, fiber amplifier, scintillator or the like, the magnetic compound used in the optical isolator or the like, substrate material, the electronic material or the like.

**Claims**

1. A method of manufacturing a garnet-type compound represented by general formula $A_3B_2C_3O_{12}$ (wherein A, B, C respectively represent one or more elements forming an A site, one or more elements forming a B site and one or more elements forming a C site, and O represents an oxygen atom) wherein the improvement comprises in that composition is determined according to desired characteristics on the basis of a composition region, where a garnet structure can be taken, led from an average ionic radius and a lattice constant of one or more elements forming each site under the conditions satisfying the following formulae (1) and (2).

$$0.50 \leq rB/rA \leq 0.86 \quad \cdots \quad (1)$$

$$11.70 \leq a \leq 13.02 \quad \cdots \quad (2)$$

wherein rA represents an average ionic radius of one or more elements which forms the A site, rB represents an average ionic radius of one or more elements which forms the B site, and a represents a lattice constant.

2. A method of manufacturing a garnet-type compound as defined in Claim 1 in which the garnet-type compound is a compound where the C site comprises Ga and is represented by a general formula $A_3B_2Ga_3O_{12}$ and composition is determined to satisfy the following formulae (1A) and (2B).

$$0.55 \leq rB/rA \leq 0.86 \cdots (1A)$$

$$12.10 \leq a \leq 13.02 \cdots (2B)$$

wherein each of rA, rB, and a represents the same matter as described above.

3. A method of manufacturing a garnet-type compound as defined in Claim 1 in which the garnet-type compound is a compound where the C site comprises Al and is represented by a general formula $A_3B_2Al_3O_{12}$ and composition is determined to satisfy the following formulae (1B) and (2D).

$$0.50 \leq rB/rA \leq 0.82 \cdots (1B)$$

$$11.70 \leq a \leq 12.60 \cdots (2D)$$

wherein each of rA, rB, and a represents the same matter as described above.

4. A garnet-type compound represented by general formula $A_3B_2C_3O_{12}$ wherein A, B, C respectively represent one or more elements forming an A site, one or more elements forming a B site and one or more elements forming a C site, and O represents an oxygen atom wherein the improvement comprises in that the following formulae (1) and (2) are satisfied.

$$0.50 \leq rB/rA \leq 0.86 \cdots (1)$$

$$11.70 \leq a \leq 13.02 \cdots (2)$$

wherein rA represents an average ionic radius of one or more elements which forms the A site, rB represents an average ionic radius of one or more elements which forms the B site, and a represents a lattice constant.

5. A garnet-type compound as defined in Claim 4 in which the following formulae (1) and (2A) are satisfied.

$$0.50 \leq rB/rA \leq 0.86 \cdots (1)$$

$$11.90 \leq a \leq 13.02 \cdots (2A)$$

wherein each of rA, rB, and a represents the same matter as described above.

6. A garnet-type compound as defined in Claim 4 or 5 in which the A site includes at least one element selected from the group consisting of La, Gd, Y and Lu, the B site includes an at least one element selected from the group consisting of Lu, Sc, Ga and Al and the C site includes Ga and/or Al.

7. A garnet-type compound as defined in any one of Claims 4 to 6 which is light emitting compound including at least one element selected from the group consisting of lanthanide elements (Ce, Pr, Nd, Pm, Sm, Eu, Gd, Tb, Dy, Ho, Er, Tm, Yb), Ti and Cr.

**8.** A garnet-type compound as defined in Claim 7 which is light emitting compound including Pr.

**9.** A garnet-type compound as defined in any one of Claims 4 to 8 in which the C site comprises Ga and is represented by a general formula $A_3B_2Ga_3O_{12}$ and the following formulae (1A) and (2B) are satisfied.

$$0.55 \leq rB/rA \leq 0.86 \cdots (1A)$$

$$12.10 \leq a \leq 13.02 \cdots (2B)$$

wherein each of rA, rB, and a represents the same matter as described above.

**10.** A garnet-type compound as defined in Claim 9 in which the following formulae (1A) and (2C) are satisfied.

$$0.55 \leq rB/rA \leq 0.86 \cdots (1A)$$

$$12.20 \leq a \leq 13.02 \cdots (2C)$$

wherein each of rA, rB, and a represents the same matter as described above.

**11.** A garnet-type compound as defined in any one of Claims 4 to 8 in which the C site comprises Al and is represented by a general formula $A_3B_2Al_3O_{12}$ and the following formulae (1B) and (2D) are satisfied.

$$0.50 \leq rB/rA \leq 0.82 \cdots (1B)$$

$$11.70 \leq a \leq 12.60 \cdots (2D)$$

wherein each of rA, rB, and a represents the same matter as described above.

**12.** A garnet-type compound as defined in Claim 11 in which the C site comprises Al and is represented by a general formula $A_3B_2Al_3O_{12}$ and the following formulae (1C) and (2E) are satisfied.

$$0.50 \leq rB/rA \leq 0.77 \cdots (1C)$$

$$11.90 \leq a \leq 12.50 \cdots (2E)$$

wherein each of rA, rB, and a represents the same matter as described above.

**13.** A garnet-type compound as defined in Claim 9 or 10 which is a light emitting compound and in which the C site comprises Ga and is represented by a general formula $A_3B_2Ga_3O_{12}$ and the following formulae (1D) and (2F) are satisfied.

$$0.56 \leq rB/rA \leq 0.75 \cdots (1D)$$

$$12.30 \leq a \leq 12.83 \quad \cdots \quad (2F)$$

wherein each of rA, rB, and a represents the same matter as described above.

**14.** A garnet-type compound as defined in Claim 11 or 12 which is a light emitting compound and in which the C site comprises Al and the following formulae (1E) and (2G) are satisfied.

$$0.53 \leq rB/rA \leq 0.75 \quad \cdots \quad (1E)$$

$$12.00 \leq a \leq 12.40 \quad \cdots \quad (2G)$$

wherein each of rA, rB, and a represents the same matter as described above.

**15.** A garnet-type compound as defined in anyone of Claims 4 to 6 and 9 to 12 which is a magnetic compound.

**16.** A garnet-type compound as defined in anyone of Claims 4 to 6 which is a magnetic compound where Fe is contained in the B site and/or the C site.

**17.** A garnet-type compound as defined in Claim 16 which is a magnetic compound where Y and/or Bi is contained in the A site.

**18.** A garnet-type compound as defined in Claim 17 in which the following formulae (3) and (4) are satisfied.

$$1.00 \leq rA \leq 1.20 \quad \cdots \quad (3)$$

$$0.53 \leq rB \quad \cdots \quad (4)$$

wherein each of rA and rB represents the same matter as described above.

**19.** A garnet-type compound as defined in Claim 18 in which the following formulae (3A) and (4) are satisfied.

$$1.06 \leq rA \leq 1.20 \quad \cdots \quad (3A)$$

$$0.53 \leq rB \quad \cdots \quad (4)$$

wherein each of rA and rB represents the same matter as described above.

**20.** A garnet-type compound as defined in Claim 16 which is a magnetic compound where the A site includes at least one element selected from the group consisting of Y, Nd, Sm, Gd, Tb, Ho and Lu, the B site includes at least one element selected from the group consisting of Ga, Al and In.

**21.** A garnet-type compound as defined in Claim 16 which is a magnetic compound where the A site includes at least one element selected from the group consisting of Mg, Ca and Sr and the C site includes Si and/or Ge.

**22.** A garnet-type compound as defined in Claim 16 which is a magnetic compound where the A site includes at least one element selected from the group consisting of Mg, Ca and Sr and the B site includes Zr and/or Sn.

**23.** A composition including a garnet-type compound as defined in any one of Claims 4 to 6 and 9 to 12.

**24.** A light emitting composition including a garnet-type compound as defined in any one of Claims 7, 8, 13 and 14.

**25.** A magnetic composition including a garnet-type compound as defined in any one of Claims 15 to 22.

**26.** A molded body including a garnet-type compound as defined in any one of Claims 4 to 6 and 9 to 12 and having a predetermined shape.

**27.** A molded body as defined in Claim 26 in the form of one of a molded body comprising a single crystal body of the garnet-type compound, a molded body comprising a polycrystalline sintered body and a molded body where powder of the garnet-type compound is dispersed in a solid medium.

**28.** A light emitting body including a garnet-type compound as defined in Claims 7, 8, 13 and 14 and having a predetermined shape.

**29.** A light emitting body as defined in Claim 28 in the form of one of a molded body comprising a single crystal body of the garnet-type compound, a molded body comprising a polycrystalline sintered body and a molded body where powder of the garnet-type compound is dispersed in a solid medium.

**30.** A magnetic body including a garnet-type compound as defined in any one of Claims 15 to 22 and having a predetermined shape.

**31.** A magnetic body as defined in Claim 30 in the form of one of a molded body comprising a single crystal body of the garnet-type compound, a molded body comprising a polycrystalline sintered body and a molded body where powder of the garnet-type compound is dispersed in a solid medium.

**32.** A film forming substrate including a garnet-type compound as defined in any one of Claims 4 to 6 and 9 to 12.

**33.** A film forming substrate including a garnet-type compound which is as defined in Claim 4 or 5 and is in the form where the A site includes at least one element selected from the group consisting of La, Nd, Sm and Gd, the B site includes Sc and/or Ga and the C site includes Ga.

**34.** A film forming substrate as defined in Claim 32 or 33 in the form of a single crystal substrate, or a polycrystalline substrate of the garnet-type compound.

**35.** A light emitting system (1) comprising a light emitting body (5) as defined in Claim 28 or 29 and an exciting light source (3) which projects exciting light onto the light emitting body.

**36.** A solid laser (10) comprising a solid laser medium (13) which comprises a light emitting body (5) as defined in Claim 28 or 29 and an exciting light source (11) which projects exciting light onto the solid laser medium.

**37.** An ionizing radiation detecting system (22) comprising a scintillator (23) which comprises a light emitting body as defined in Claim 28 or 29 and a scintillation light detector (24) which detects light emitted from the scintillator.

**38.** An optical isolator comprising a magnetic body as defined in Claim 30 or 31.

**39.** An optical circulator comprising a magnetic body as defined in Claim 30 or 31.

**FIG.1**

**FIG.2A**

**FIG.2B**

FIG.3

# FIG.4A

20

22   22

24   21

23

40

D

23   21

24

22   22

# FIG.4B

22

23   24a

CIRCUMFERENTIAL DIRECTION

24   24b   24

DIRECTION OF AXIS

# FIG.5A

# FIG.5B

# FIG.6

# FIG.7

# FIG.8

# FIG.9

# FIG.10

# FIG.11

# FIG.12

# FIG.13

# FIG.14

# FIG.15

# FIG.16

## FIG.17

## FIG.18

# FIG.19

COMPOUND2 (Pr:YSGG)
(EXCITING WAVELNGTH 448nm)

# FIG.20

COMPOUND3 (Pr:GGGG)
(EXCITING WAVELNGTH 449nm)

# FIG.21

COMPOUND4 (Pr:LSGG)
(EXCITING WAVELNGTH 450nm

# FIG.22

COMPOUND5 (Pr:GSGG)
(EXCITING WAVELNGTH 449nm)

# FIG.23

COMPOUND6(Pr:YGGG)
(EXCITING WAVELNGTH 448nm)

# FIG.24

COMPOUND77(Pr:YSAG)
(EXCITING WAVELNGTH 450nm)

# FIG.25

COMPOUND78 (Pr:YAAG)
(EXCITING WAVELNGTH 451nm)

INTENSITY OF FLUORESCENCE / a.u.

WAVELENGTH / nm

# FIG.26

COMPOUND79 (Pr:YGAG)
(EXCITING WAVELNGTH 450nm)

INTENSITY OF FLUORESCENCE / a.u.

WAVELENGTH / nm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- LANDORT-BORNSTEIN Group III 12a (Garnets and Perovskites), (1.1.3 :Lattice parameters of garnets. Springer-Verlag Berlinh, 1978, 22-23
- **R.D. SHANNON.** Revised Effective Ionic Radii and Systematic Studies of Interatomic Distances in Halides and Chalcogenides. *Acta Crystallogr,* 1976, vol. A32, 751-767

- LANDORT-BORNSTEIN Group III 12a (Garnets and Perovskites), (1.1.3:Lattice parameters of garnets. Springer-Verlag Berlinh, 1978, 22-23
- *Journal of Solid State Chemistry,* 1973, vol. 8, 357